# EUROPEAN PATENT APPLICATION

(11) **EP 3 893 087 A1**
(43) Date of publication of application: **13.10.2021**
(21) Application number: 19891969.8
(22) Date of filing: 11.10.2019
(51) Int. Cl.: G06F 3/01, G06F 3/16, G10L 15/00

(54) **RESPONSE PROCESSING DEVICE, RESPONSE PROCESSING METHOD, AND RESPONSE PROCESSING PROGRAM**

(30) Priority: 07.12.2018 JP 2018230404
(71) Applicant: Sony Group Corporation, Minato-ku, Tokyo 108-0075 (JP)
(72) Inventor: SAITO, Mari, Tokyo 108-0075 (JP)
(74) Representative: 2SPL Patentanwälte PartG mbB
(86) International application number: PCT/JP2019/040156
(87) International publication number: WO 2020/116026

(57) **Abstract**

A response processing apparatus (100) includes an acquisition unit (40) that acquires, from a user, input information that is information used as a trigger to cause an information device to generate a response, a selection unit (50) that selects an information device that generates a response corresponding to the input information from among a plurality of information devices, and an output control unit (55) that controls output of a response that corresponds to the input information and that is generated by the selected information device.

## Description

### Field

The present disclosure relates to a response processing apparatus, a response processing method, and a response processing program. In particular, the present disclosure relates to a response process for a user who uses a plurality of information devices.

### Background

With the improvement of a network technology, opportunities for a user to use a plurality of information devices are increasing. In view of the situation as described above, a technology for smoothly using a plurality of information devices has been proposed.

For example, a technology for, in a system in which a plurality of client devices are connected via a network, arranging a device that integrally controls the system to effectively perform a process of the entire system has been proposed.

### Citation List

### Patent Literature

Patent Literature 1: Japanese Laid-open Patent Publication No. 7-4882

### Summary

### Technical Problem

According to the conventional technology as described above, the device that integrally controls the system receives a processing request to each of the information devices and performs a process corresponding to functions of each of the information devices, so that it is possible to effectively perform a process of the entire system.

However, in the conventional technology, it is not always possible to improve usability for a user. Specifically, in the conventional technology, only determination on whether each of the information devices is able to accept a processing request is performed, and when each of the information devices performs a process by accepting a request of the user for example, it is not always possible to perform the process in a mode that meets a demand of the user.

To cope with this, in the present disclosure, a response processing apparatus, a response processing method, and a response processing program that are able to improve usability for a user are proposed.

### Solution to Problem

To solve the problem described above, a response processing apparatus includes: an acquisition unit that acquires, from a user, input information that is information used as a trigger to cause an information device to generate a response; a selection unit that selects an information device that generates a response corresponding to the input information from among a plurality of information devices; and an output control unit that controls output of a response that corresponds to the input information and that is generated by the selected information device.

### Brief Description of Drawings

FIG. 1 is a diagram (1) illustrating an example of a response process according to a first embodiment of the present disclosure.
FIG. 2 is a diagram (2) illustrating an example of the response process according to the first embodiment of the present disclosure.
FIG. 3 is a diagram (3) illustrating an example of the response process according to the first embodiment of the present disclosure.
FIG. 4 is a diagram (4) illustrating an example of the response process according to the first embodiment of the present disclosure.
FIG. 5 is a diagram (5) illustrating an example of the response process according to the first embodiment of the present disclosure.
FIG. 6 is a diagram (6) illustrating an example of the response process according to the first embodiment of the present disclosure.
FIG. 7 is a diagram illustrating a configuration example of a response processing system according to the first embodiment of the present disclosure.
FIG. 8 is a diagram illustrating an example of a user information table according to the first embodiment of the present disclosure.
FIG. 9 is a diagram illustrating an example of a behavior information table according to the first embodiment of the present disclosure.
FIG. 10 is a diagram illustrating an example of a terminal information table according to the first embodiment of the present disclosure.
FIG. 11 is a diagram illustrating an example of a function table according to the first embodiment of the present disclosure.
FIG. 12 is a flowchart illustrating the flow of a process according to the first embodiment of the present disclosure.
FIG. 13 is a diagram illustrating an example of information processing according to a second embodiment of the present disclosure.
FIG. 14 is a diagram illustrating an example of a database according to the second embodiment of the present disclosure.
FIG. 15 is a diagram illustrating an example of information processing according to a third embodiment of the present disclosure.
FIG. 16 is a diagram illustrating an example of information processing according to a fourth embodiment of the present disclosure.
FIG. 17 is a hardware configuration diagram illustrating an example of a computer that implements functions of a response processing apparatus.

### Description of Embodiments

Embodiments of the present disclosure will be described in detail below based on the drawings. Meanwhile, in each of the embodiments below, the same components are denoted by the same reference symbols, and repeated explanation will be omitted.

The present disclosure will be described in sequence of items below.
1. First Embodiment
   1-1. Example of response process according to first embodiment
   1-2. Configuration of response processing system according to first embodiment
   1-3. Flow of response process according to first embodiment
   1-4. Modification of first embodiment
2. Second Embodiment
   2-1. Example of response process according to second embodiment
   2-2. Modification of second embodiment
3. Third Embodiment
4. Fourth Embodiment
5. Other Embodiments
6. Effects of response processing apparatus according to present disclosure
7. Hardware configuration

### 1. First Embodiment

### 1-1. Example of response process according to first embodiment

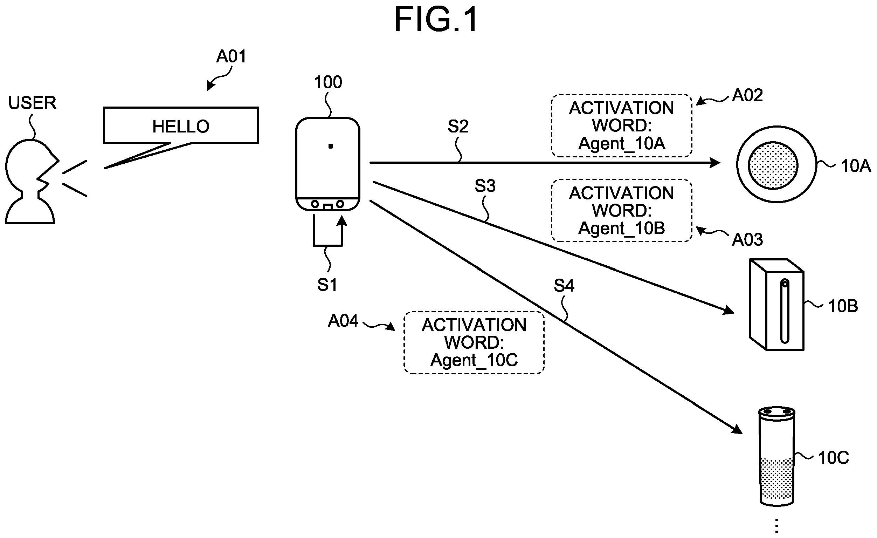

One example of a response process according to a first embodiment of the present disclosure will be described with reference to FIG. 1. FIG. 1 is a diagram (1) illustrating an example of the response process according to the first embodiment of the present disclosure. Information processing according to the first embodiment of the present disclosure is performed by a response processing apparatus 100 illustrated in FIG. 1.

The response processing apparatus 100 is one example of a response processing apparatus according to the present disclosure. The response processing apparatus 100 is what is called an Internet of Things (IoT) device, and performs various kinds of information processing in cooperation with an external device, such as a cloud server. For example, the response processing apparatus 100 is an apparatus that dialogues with a user, and performs various kinds of information processing, such as voice recognition or response generation for a user. The voice recognition, a voice response process, and the like performed by the response processing apparatus 100 may be referred to as an agent function. Further, the response processing apparatus 100 may be referred to as an agent device.

In the first embodiment, an example in which the response processing apparatus 100 is what is called a smart speaker is illustrated. Meanwhile, the response processing apparatus 100 may include not only a speaker unit that performs voice output, but also a display unit (a liquid crystal display or the like) that outputs a video or the like. Further, the response processing apparatus 100 may be a smartphone, a tablet terminal, or the like. In this case, the smartphone or the tablet terminal functions as the response processing apparatus 100 according to the present disclosure by executing a program (application) for implementing the response process according to the present disclosure.

Furthermore, the response processing apparatus 100 may be a wearable device, such as a watch-type terminal or a glasses-type terminal, other than the smartphone or the tablet terminal. Moreover, the response processing apparatus 100 may be implemented by various smart devices that have information processing functions. For example, the response processing apparatus 100 may be a smart household appliance, such as a television, an air conditioner, or a refrigerator, a smart vehicle, such as a car, or an autonomous robot, such as a drone, a pet-like robot, or a humanoid robot.

In the example in FIG. 1, it is assumed that the response processing apparatus 100 is installed in a home that is a residence of a user who use the response processing apparatus 100. In the first embodiment, the response processing apparatus 100 performs a response process on information (hereinafter, referred to as "input information"), such as collected voice or a behavior of a user, that is used as a trigger to generate a response. For example, the response processing apparatus 100 recognizes a query issued by the user, and outputs an answer to the query by voice or displays information on the query on a screen. Meanwhile, it may be possible to use various well-known techniques in a voice recognition process, an output process, and the like performed by the response processing apparatus 100.

Further, in the example illustrated in FIG. 1, it is assumed that the user uses information devices, such as a terminal 10A, a terminal 10B, and a terminal 10C, in addition to the response processing apparatus 100. The terminal 10A, the terminal 10B, and the terminal 10C are, similarly to the response processing apparatus 100, various kinds of information devices having agent functions. For example, the terminal 10A, the terminal 10B, and the terminal 10C are information devices developed by various manufacturers, and are information devices each of which cooperates with a different cloud server and each of which is available as an agent device. Meanwhile, in the following, individual terminals, such as the terminal 10A, the terminal 10B, and the terminal 10C, may collectively be referred to as a "terminal 10" when they need not be distinguished from one another.

As in the example in FIG. 1, there are various problems to be solved in order to perform appropriate operation in a situation in which a plurality of agent devices are used by the user.

For example, an activation word for starting to use the agent function is set in each of the agent devices. Therefore, when using the plurality of agent devices, the user needs to speak the action word corresponding to each of the agent devices.

Further, upon receiving a query from the user for example, each of the agent devices accesses a different service and obtains an answer. Specifically, when receiving a query about weather information from the user, each of the agent devices accesses a different weather information service and obtains a different answer. Therefore, it is difficult for the user to determine whether the agent device that provides an answer to the query will provide information (for example, ultraviolet information, pollen information, or the like) that the user wants to know. Furthermore, a certain agent device may have difficulty in accessing a service to obtain an answer to the query issued by the user, and may have difficulty in generating an answer. If an appropriate answer is not obtained, the user needs to take time and effort to speak the same query to a different agent device.

Moreover, each of the agent devices has various different kinds of performance and functions in terms of, for example, whether it is possible to output an image or whether it is possible to output a voice. With an increase in the number of agent devices, it becomes more difficult for the user to memorize the performance and the functions, so that it becomes difficult to implement the performance and the functions of the agent devices. Furthermore, when the agent devices are updated and new functions are added for example, a large burden is imposed on the user to check the updates one by one, so that the added functions may remain unused.

To cope with this, the response processing apparatus 100 according to the present disclosure solve the problems as described above by a response process as described below.

Specifically, the response processing apparatus 100 functions as a front end device of the plurality of agent devices, and collectively receives communications with the user. For example, the response processing apparatus 100 analyzes a content of a query received from the user and selects an agent device that generates a response. As one example, the response processing apparatus 100 refers to functions and performance of a plurality of cooperating agent devices, and selects an agent device that is expected to generate a most appropriate answer to the query from the user. With this configuration, the response processing apparatus 100 is able to improve a degree of accuracy at which a response desired by the user is generated. Furthermore, the response processing apparatus 100 determines a mode of output of the response that is generated by the selected agent device. For example, the response processing apparatus 100 receives the generated response (for example, voice data), detects a position of the user, and transmits the response to a different agent device that is installed at a position closest to the user. Further, the response processing apparatus 100 causes the agent device, which has received the response, to output the response. With this configuration, the response processing apparatus 100 is able to output the response from the agent device that is located at the position closest to the user, so that it is possible to appropriately send the information to the user.

In this manner, the response processing apparatus 100 operates as the front end device of the plurality of agent devices, and controls generation and output of the response, to thereby improve usability for the user. One example of the response process according to the first embodiment of the present disclosure will be described below in sequence with reference to FIG. 1 to FIG. 6.

In the example illustrated in FIG. 1, it is assumed that the response processing apparatus 100 cooperates with each of the terminal 10A, the terminal 10B, and the terminal 10C. For example, the response processing apparatus 100 stores, as a database, information, such as activation words for activating the terminal 10A, the terminal 10B, and the terminal 10C and a format for receiving voice by each of the terminals (for example, a type of an audio application programming interface (API) that can be processed by each of the agent devices, or the like).

Furthermore, the response processing apparatus 100 receives, in advance, a setting of an activation word for activating the subject apparatus from the user. For example, it is assumed that the response processing apparatus 100 has received a voice input of "hello" as the activation word.

In this case, if a voice A01 of "hello" is received from the user, the response processing apparatus 100 activates a response process of the subject apparatus (Step S1). Further, the response processing apparatus 100 activates each of the cooperating terminals 10 by using the voice A01 as a trigger.

Specifically, the response processing apparatus 100 converts information indicating that "the voice A01 is input from the user" to information corresponding to the activation word of the terminal 10A, and transmits converted information A02 to the terminal 10A (Step S2). The information corresponding to the activation word of the terminal 10A may be voice data for actually activating the terminal 10A or a script (program) for activating the terminal 10A. For example, the response processing apparatus 100 transmits the information A02 to the terminal 10A by using a home network, such as Wi-Fi (registered trademark), or wireless communication, such as Bluetooth (registered trademark).

In other words, the user is able to activate the terminal 10A in a linked manner by only inputting the voice A01 that is the activation word to the response processing apparatus 100.

Similarly, the response processing apparatus 100 converts the information indicating that "the voice A01 is input from the user" to information corresponding to the activation word of the terminal 10B, and transmits converted information A03 to the terminal 10B (Step S3). Furthermore, the response processing apparatus 100 converts the information indicating that "the voice A01 is input from the user" to information corresponding to the activation word of the terminal 10C, and transmits converted information A04 to the terminal 10C (Step S4).

In this manner, when recognizing the activation word of the subject apparatus, the response processing apparatus 100 activates each of the cooperating terminal 10A, the cooperating terminal 10B, and the cooperating terminal 10C. With this configuration, the user is able to activate all of the devices installed in his/her home without speaking the activation words to all of the devices with which the user is going to dialogue. Meanwhile, the response processing apparatus 100 may receive, from the user, setting for individually specifying the terminal 10 that is not activated in cooperation with the subject apparatus. With this configuration, the user is able to distinguish between the terminal 10 that is activated in a cooperative manner and the terminal 10 that is not activated in a cooperative manner.

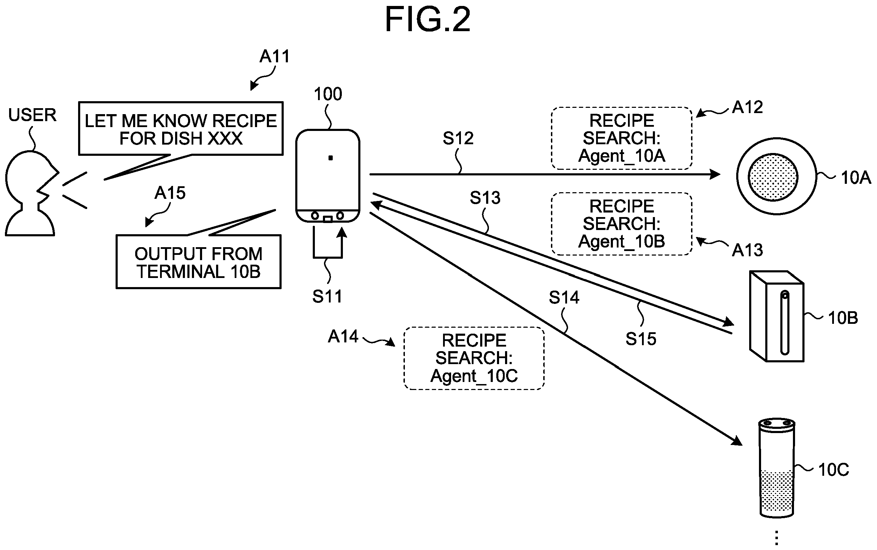

One example in which the response processing apparatus 100 outputs a response to a query received from the user will be described below with reference to FIG. 2.

FIG. 2 is a diagram illustrating an example (2) of the response process according to the first embodiment of the present disclosure.

In the example in FIG. 1, the user that has activated the response processing apparatus 100 subsequently inputs a query to the response processing apparatus 100. For example, the user speaks that "let me know a recipe for a dish XXX" and inputs a voice A11 including the content of the speech to the response processing apparatus 100.

The response processing apparatus 100 starts the response process by using the voice A11 as input information (Step S11). Specifically, the response processing apparatus 100 acquires the voice A11, and analyzes the query that is issued by the user and that is included in the voice A11 through an automatic speech recognition (ASR) process or a natural language understanding (NLU) process. For example, if the voice A11 includes a purpose of the query from the user, the response processing apparatus 100 recognizes the purpose of the query as the input information and starts a process of outputting, as the response, an answer corresponding to the purpose of the query.

In the example illustrated in FIG. 2, the response processing apparatus 100 recognizes that the purpose of the query from the user is "a search for a recipe for a dish XXX". In this case, the response processing apparatus 100 first determines whether it is possible to perform "a search for a recipe for a dish XXX" by the subject apparatus. If it is possible to perform "a search for a recipe for a dish XXX" by the subject apparatus, the response processing apparatus 100 may generate a response to the user and outputs the response from the subject apparatus.

If the response processing apparatus 100 is not able to perform "a search for a recipe for a dish XXX", e.g., if it is difficult to access a service that performs "a search for a recipe" or if it is difficult to detect "a recipe for a dish XXX", the response processing apparatus 100 transmits the query issued by the user to the cooperating terminal 10A or the like. In other words, the response processing apparatus 100 transmits "a search for a recipe for a dish XXX" that is the purpose of the query issued by the user to the terminal 10A or the like, and causes the terminal 10A or the like to perform the search in place of the subject apparatus.

For example, the response processing apparatus 100 transmits information A12 indicating "a search for a recipe for a dish XXX" that is the purpose of the query issued by the user to the terminal 10A (Step S12). At this time, the response processing apparatus 100 converts the voice A11 received from the user to the information A12 indicating "a search for a recipe for a dish XXX" in accordance with the audio API or the like of the terminal 10A, for example. In other words, the response processing apparatus 100 converts the voice A11 to the information A12 that is in a certain format that can be recognized by the terminal 10A, and thereafter transmits the information A12 to the terminal 10A. This indicates the same situation in which the terminal 10A receives a speech of "let me know a recipe for a dish XXX" from the user.

Similarly, the response processing apparatus 100 converts the voice A11 to information A13 in a certain format that can be recognized by the terminal 10B, and thereafter transmits the information A13 to the terminal 10B (Step S13). Furthermore, the response processing apparatus 100 converts the voice A11 to information A14 in a certain format that can be recognized by the terminal 10C, and thereafter transmits the information A14 to the terminal 10C (Step S14). In other words, the response processing apparatus 100 selects the terminal 10A, the terminal 10B, and the terminal 10C as the agent devices that generate responses to the query issued by the user.

Thereafter, the response processing apparatus 100 receives a return indicating whether it is possible to generate an answer to the query issued by the user from the terminal 10A, the terminal 10B, or the terminal 10C. In the example in FIG. 2, it is assumed that the terminal 10B transmits, to the response processing apparatus 100, a reply indicating that it is possible to generate the answer to the query issued by the user (Step S15). Meanwhile, while illustration is omitted in FIG. 2, the terminal 10A and the terminal 10C may transmit, to the response processing apparatus 100, replies indicating that it is difficult to generate answers to the query issued by the user.

Upon receiving the reply from the terminal 10B, the response processing apparatus 100 selects the terminal 10B as the agent device that generates the response to be output to the user. In this case, the response processing apparatus 100 outputs a voice for notifying the user of the terminal 10B that serves as an output destination. For example, the response processing apparatus 100 outputs a voice A15 including a content of "the terminal 10B performs output" to the user. Subsequently, the response processing apparatus 100 causes the terminal 10B to output, by voice, a recipe that the terminal 10B has retrieved.

Meanwhile, the response processing apparatus 100 may acquire, from the terminal 10B, voice data that is to be output by the terminal 10B, by using the audio API common to the terminal 10B. In this case, the response processing apparatus 100 itself may output voice instead of causing the terminal 10B to output voice. With this configuration, the user is able to obtain information by voice output performed by the response processing apparatus 100 even if the information is actually retrieved by the terminal 10B, so that the user is able to perform a dialogue without regard to the terminal 10B and the like other than the response processing apparatus 100.

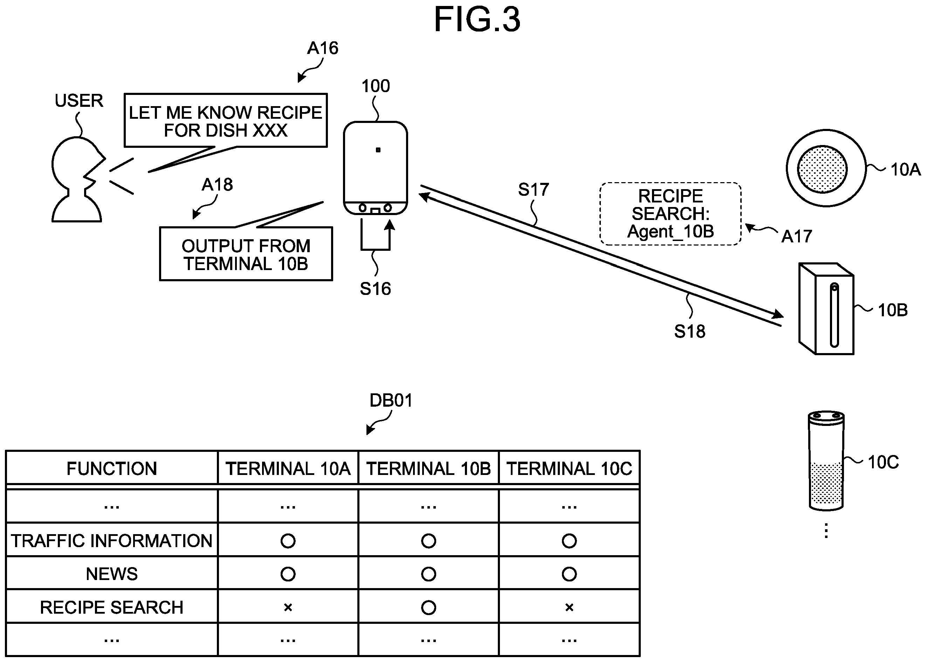

Next, a process performed by the response processing apparatus 100 to specify the terminal 10 that is caused to generate a response to a query issued by the user will be described with reference to FIG. 3. FIG. 3 is a diagram illustrating an example (3) of the response process according to the first embodiment of the present disclosure.

Similarly to FIG. 2, the response processing apparatus 100 acquires a voice A16 including a content of "let me know a recipe for a dish XXX" from the user (Step S16) .

In the example in FIG. 3, the response processing apparatus 100 includes a database DB01 that stores therein functions that can be executed by each of the terminals 10. In this case, if the response processing apparatus 100 determines that the purpose of the user is "a search for a recipe" through the ASR process or the NLU process on the voice A16, the response processing apparatus 100 refers to the database DB01 and extracts the terminal 10 that can perform "a search for a recipe".

The response processing apparatus 100 refers to the database DB01 and recognizes that the terminal 10A and the terminal 10C do not have a function to search for a recipe and that the terminal 10B has the function to search for a recipe. In this case, the response processing apparatus 100 selects the terminal 10B and transmits information A17 indicating the purpose of the user to the terminal 10B without transmitting the information to the terminal 10A and the terminal 10C (Step S17).

The terminal 10B transmits, to the response processing apparatus 100, a reply indicating that it is possible to generate a response to the information A17 (Step S18). Thereafter, similarly to the example in FIG. 2, the response processing apparatus 100 outputs a voice A18 including a content of "the terminal 10B performs output" to the user and causes the terminal 10B to output the recipe by voice. In this manner, the response processing apparatus 100 may check the functions of each of the terminals 10 in advance, and transmit a request of the user to only the terminal 10 that is expected to be able to generate a response. With this configuration, the response processing apparatus 100 is able to prevent occurrence of unnecessary communication, so that it is possible to reduce a communication load and improve a speed of information processing.

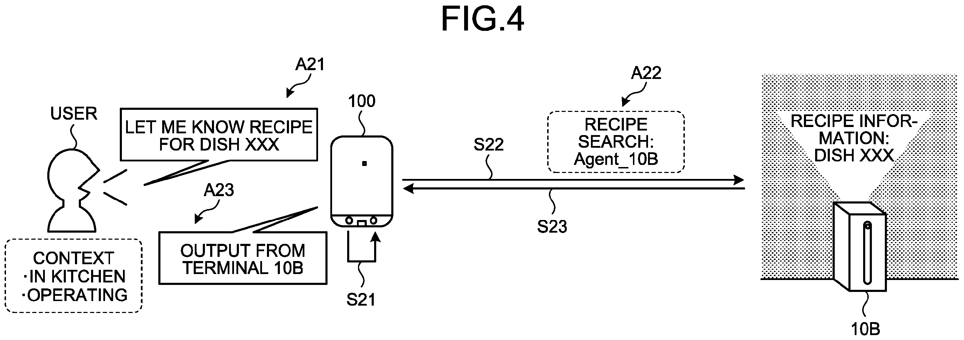

Next, one example in which the response processing apparatus 100 outputs a response based on a context of the user will be described with reference to FIG. 4. FIG. 4 is a diagram illustrating an example (4) of the response process according to the first embodiment of the present disclosure.

Similarly to FIG. 2, the response processing apparatus 100 acquires a voice A21 including a content of "let me know a recipe for a dish XXX" from the user (Step S21). Further, the response processing apparatus 100 transmits information A22 indicating the purpose of the user to the terminal 10B (Step S22). The terminal 10B transmits, to the response processing apparatus 100, a reply indicating that it is possible to generate a response to the information A22 (Step S23).

In the example in FIG. 4, the response processing apparatus 100 acquires a context of the user at the time of outputting the response. The context of the user is, for example, information indicating a current situation of the user. In the example in FIG. 4, the response processing apparatus 100 acquires, as the context, a position of the user captured by a camera included in the subject apparatus, a user's situation obtained by recognizing an image captured by the camera, or the like. Specifically, the response processing apparatus 100 acquires a context indicating that the user is "in a kitchen" and the user "is operating", e.g., user's hands are full.

Then, the response processing apparatus 100 determines a mode of output of the response in accordance with the acquired context. For example, if the terminal 10B is located in the kitchen, the response processing apparatus 100 determines that the response generated by the terminal 10B is to be output by the terminal 10B.

Further, because the user is operating, the response processing apparatus 100 causes the terminal 10B to output the response both by voice and by an image to allow the user not to stop what he/she is doing. For example, the terminal 10B activates a projector function and projects an image on a wall of the kitchen so that the generated response (recipe information) is output on the wall. Furthermore, the terminal 10B outputs the generated response by voice. Moreover, similarly to the example in FIG. 3, the response processing apparatus 100 outputs a voice A23 including a content of "the terminal 10B performs output" to the user.

In this manner, the response processing apparatus 100 may determine the mode of output of the response in accordance with the context of the user. For example, the response processing apparatus 100 causes the terminal 10 that is located near the user to output the response, or select a type of information (a voice, an image, a video, or the like) of the response in accordance with the situation of the user. With this configuration, the response processing apparatus 100 is able to implement a dialogue system with good usability.

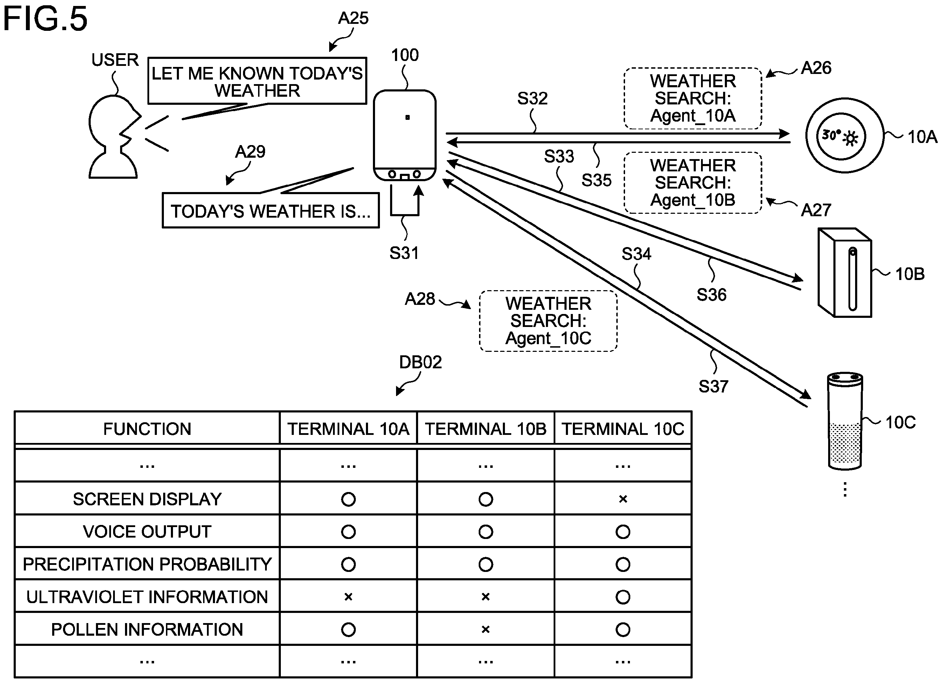

Next, one example of a case in which the response processing apparatus 100 acquires a plurality of responses will be described with reference to FIG. 5. FIG. 5 is a diagram illustrating an example (5) of the response process according to the first embodiment of the present disclosure.

In the example in FIG. 5, the response processing apparatus 100 acquires a voice A25 including a content of "let me know today's weather" from the user (Step S31). If the response processing apparatus 100 determines that the purpose of the user is "a search for today's weather information" through the ASR process or the NLU process on the voice A25, the response processing apparatus 100 transmits the purpose of the user to each of the terminals 10.

In other words, similarly to FIG. 2, the response processing apparatus 100 transmits, to the terminal 10A, information A26 in a certain format corresponding to the terminal 10A (Step S32). Further, the response processing apparatus 100 transmits, to the terminal 10B, information A27 in a certain format corresponding to the terminal 10B (Step S33). Furthermore, the response processing apparatus 100 transmits, to the terminal 10C, information A28 in a certain format corresponding to the terminal 10C (Step S34).

The terminal 10A transmits, as a response corresponding to the information A26, retrieved weather information to the response processing apparatus 100 (Step S35). Similarly, the terminal 10B transmits, as a response corresponding to the information A27, retrieved weather information to the response processing apparatus 100 (Step S36). Similarly, the terminal 10C transmits, as a response corresponding to the information A28, retrieved weather information to the response processing apparatus 100 (Step S37).

As described above, the terminal 10A, the terminal 10B, and the terminal 10C acquire information from different services, and therefore, transmit different kinds of information to the response processing apparatus 100 even though all pieces of the information are the weather information. In other words, the response processing apparatus 100 acquires a different response (weather information) from each of the terminal 10A, the terminal 10B, and the terminal 10C.

For example, a database DB02 illustrated in FIG. 5 indicates information included in the responses acquired by the response processing apparatus 100. In the example illustrated in FIG. 5, it is indicated that the weather information acquired by the terminal 10A is information for which "screen display" is available, "voice output" is available, "precipitation probability" and "pollen information" are included, and "ultraviolet information" is not included. Further, it is indicated that the weather information acquired by the terminal 10B is information for which "screen display" is available, "voice output" is available, "precipitation probability" is included, and "ultraviolet information" and "pollen information" are not included. Furthermore, it is indicated that the weather information acquired by the terminal 10C is information for which "voice output" is available, "precipitation probability", "ultraviolet information", and "pollen information" are included, and "screen display" for displaying weather information by a still image, a video, or the like is not available.

The response processing apparatus 100 refers to the database DB02 and determines which of the responses is to be output to the user. For example, the response processing apparatus 100 may output the weather information acquired by the terminal 10C, which includes a number of pieces of information, such as the "precipitation probability", the "ultraviolet information", and the "pollen information", among the pieces of acquired weather information. Alternatively, the response processing apparatus 100 may output the weather information acquired by the terminal 10A or the terminal 10B, for which screen display is available, among the pieces of acquired weather information. The response processing apparatus 100 outputs a voice A29 including the weather information that is determined to be output, or a screen included in the weather information. Alternatively, the response processing apparatus 100 may cause the terminal 10A or the like to output the weather information.

In this manner, the response processing apparatus 100 may acquire a plurality of responses and determine a response to be output to the user among the acquired responses. For example, the response processing apparatus 100 may determine a response that is to be actually output to the user in accordance with information amounts, qualities, or the like of the acquired responses. With this configuration, the response processing apparatus 100 is able to select and output an appropriate response from among the plurality of responses, so that it is possible to easily realize a response process as desired by the user. Further, the response processing apparatus 100 may generate a response by appropriately integrating or combining pieces of information that are acquired from a plurality of sources. Specifically, the response processing apparatus 100 may combine parts of image information and voice information acquired from the different terminals 10, or edit and combine parts of a plurality of pieces of voice information.

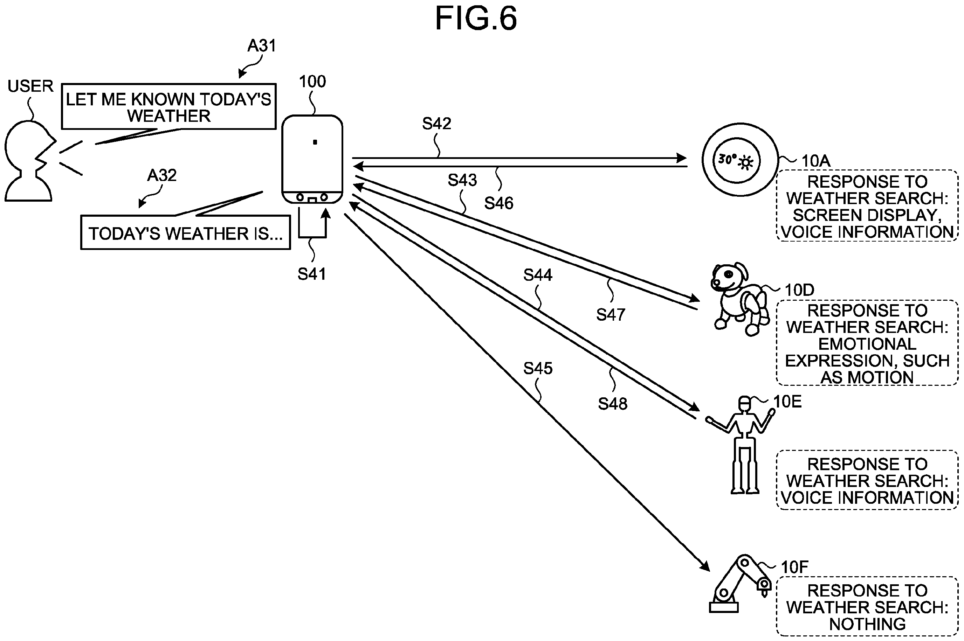

Next, one example in which the response processing apparatus 100 performs the response process in cooperation with the terminals 10 in various modes will be described with reference to FIG. 6. FIG. 6 is a diagram illustrating an example (6) of the response process according to the first embodiment of the present disclosure.

In the example illustrated in FIG. 6, the response processing apparatus 100 cooperates with a terminal 10D that is a pet-like robot, a terminal 10E that is a humanoid robot, a terminal 10F that is a gripper robot, and the like in addition to the terminal 10A.

In the example in FIG. 6, similarly to the example in FIG. 5, the response processing apparatus 100 acquires a voice A31 including a content of "let me know today's weather" from the user (Step S41). If the response processing apparatus 100 determines that the purpose of the user is "a search for today's weather information" through the ASR process or the NLU process on the voice A31, the response processing apparatus 100 transmits the purpose of the user to each of the terminals 10.

In other words, similarly to FIG. 5, the response processing apparatus 100 transmits, to the terminal 10A, the purpose of the user converted to a certain format corresponding to the terminal 10A (Step S42). Further, the response processing apparatus 100 transmits, to the terminal 10D, the purpose of the user converted to a certain format corresponding to the terminal 10D (Step S43). Furthermore, the response processing apparatus 100 transmits, to the terminal 10E, the purpose of the user converted to a certain format corresponding to the terminal 10E (Step S44). Moreover, the response processing apparatus 100 transmits, to the terminal 10F, the purpose of the user converted to a certain format corresponding to the terminal 10F (Step S45).

The terminal 10A transmits retrieved weather information to the response processing apparatus 100 (Step S46). In contrast, the terminal 10D sends, as an output to the response processing apparatus 100, information indicating that movement corresponding to the retrieved weather information is to be performed (Step S47). For example, the terminal 10D sends, to the response processing apparatus 100, information indicating that movement representing pleasure is to be performed if the retrieved weather information indicates fine weather. Further, the terminal 10E sends, to the response processing apparatus 100, information indicating that the retrieved weather information may be output by voice (Step S48). Meanwhile, the terminal 10F may transmit information indicating that a response to the weather information is not available or return error information indicating that the purpose of the user is not understandable.

The response processing apparatus 100 determines a mode of output of the response to the user, on the basis of the information transmitted from each of the terminals 10. For example, the response processing apparatus 100 outputs a voice A32 indicating the weather information by the subject apparatus. Furthermore, the response processing apparatus 100 causes the terminal 10A to output the weather information with screen display. Moreover, the response processing apparatus 100 causes the terminal 10D to output movement representing pleasure. Furthermore, the response processing apparatus 100 causes the terminal 10E to output voice indicating the weather information.

In this manner, the response processing apparatus 100 may output responses in different modes by using the characteristics of the respective terminals 10, instead of always causing the single terminal 10 to output only a single piece of weather information. With this configuration, the user is able to check various responses output by the various terminals 10 by performing only a single dialogue with the response processing apparatus 100.

As illustrated in FIG. 1 to FIG. 6, the response processing apparatus 100 according to the first embodiment acquires, from the user, the input information that is information used as a trigger to cause each of the terminals 10 to generate a response, and selects one or more terminals 10 that generate responses corresponding to the input information from among the plurality of terminals 10. Further, the response processing apparatus 100 controls output of the response that corresponds to the input information and that is generated by the the selected terminal 10.

As described above, the response processing apparatus 100 serves as the front end that controls the plurality of terminals 10, so that the user is able to obtain information acquired by the plurality of terminals 10 and responses to be output by performing a dialogue with only the response processing apparatus 100. With this configuration, the response processing apparatus 100 is able to improve the usability for the user.

### 1-2. Configuration of response processing system according to first embodiment

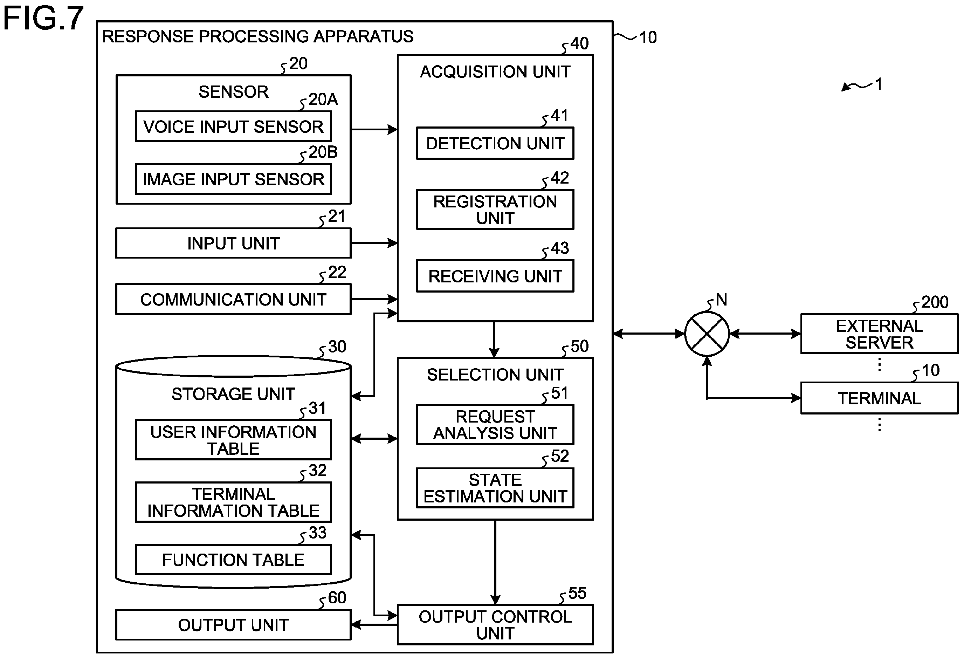

A configuration of the response processing apparatus 100 and the like according to the first embodiment as described above will be described below with reference to FIG. 7. FIG. 7 is a diagram illustrating a configuration example of a response processing system 1 according to the first embodiment of the present disclosure.

As illustrated in FIG. 7, the response processing system 1 includes a terminal 10, the response processing apparatus 100, and an external server 200. The terminal 10, the response processing apparatus 100, and the external server 200 are communicably connected to one another via a network N (for example, the Internet) illustrated in FIG. 7 in a wired or wireless manner. While not illustrated in FIG. 7, the response processing system 1 may include the plurality of terminals 10 and the plurality of external servers 200.

The terminal 10 is an information processing terminal that is used by the user. The terminal 10 is what is called an agent device and performs a dialogue with the user or generates a response to a voice or a movement provided by the user. The terminal 10 may include all or a part of the components included in the response processing apparatus 100 to be described later.

The external server 200 is a service server that provides various services. For example, the external server 200 provides weather information, traffic information, or the like in accordance with a request from the terminal 10 or the response processing apparatus 100.

The response processing apparatus 100 is an information processing terminal that performs the response process according to the present disclosure. As illustrated in FIG. 7, the response processing apparatus 100 includes a sensor 20, an input unit 21, a communication unit 22, a storage unit 30, an acquisition unit 40, a selection unit 50, and an output unit 60.

The sensor 20 is a device for detecting various kinds of information. The sensor 20 includes, for example, a voice input sensor 20A that collects a voice spoken by the user. The voice input sensor 20A is, for example, a microphone. Further, the sensor 20 includes, for example, an image input sensor 20B. The image input sensor 20B is, for example, a camera for capturing an image of the user or an image of a situation in the home of the user.

Furthermore, the sensor 20 may include a touch sensor, an acceleration sensor, a gyro sensor, or the like that detects that the user has touched the response processing apparatus 100. Moreover, the sensor 20 may include a sensor that detects a current location of the response processing apparatus 100. For example, the sensor 20 may receive a radio wave transmitted from a global positioning system (GPS) satellite and detect location information (for example, a latitude and a longitude) indicating a current location of the response processing apparatus 100 on the basis of the received radio wave.

Furthermore, the sensor 20 may include a radio wave sensor that detects a radio wave emitted by an external apparatus, an electromagnetic sensor that detects an electromagnetic wave, or the like. Moreover, the sensor 20 may detect an environment in which the response processing apparatus 100 is placed. Specifically, the sensor 20 may include an illuminance sensor that detects illuminance around the response processing apparatus 100, a humidity sensor that detects humidity around the response processing apparatus 100, a geomagnetic sensor that detects a magnetic field at a position at which the response processing apparatus 100 is located.

Furthermore, the sensor 20 need not always be arranged inside the response processing apparatus 100. For example, the sensor 20 may be installed outside the response processing apparatus 100 as long as it is possible to transmit information that is sensed using communication or the like to the response processing apparatus 100.

The input unit 21 is a device for receiving various kinds of operation from the user. For example, the input unit 21 is implemented by a keyboard, a mouse, a touch panel, or the like.

The communication unit 22 is implemented by, for example, a network interface card (NIC) or the like. The communication unit 22 is connected to the network N in a wired or wireless manner, and transmits and receives information to and from the terminal 10, the external server 200, and the like via the network N.

The storage unit 30 is implemented by, for example, a semiconductor memory element, such as a random access memory (RAM) or a flash memory, or a storage device, such as a hard disk or an optical disk. The storage unit 30 includes a user information table 31, a terminal information table 32, and a function table 33. Each of the data tables will be described in sequence below.

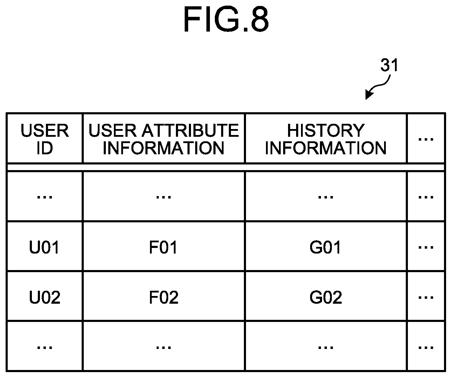

The user information table 31 stores therein information on a user who uses the response processing apparatus 100. FIG. 8 illustrates an example of the user information table 31 according to the first embodiment. FIG. 8 is a diagram illustrating an example of the user information table 31 according to the first embodiment of the present disclosure. In the example illustrated in FIG. 8, the user information table 31 includes items of a "user ID", "user attribute information", and "history information".

The "user ID" indicates identification information for identifying a user. The "user attribute information" indicates various kinds of information on the user that are registered by the user at the time of use of the response processing apparatus 100. In the example illustrated in FIG. 8, the item of the user attribute information is schematically represented by "F01" or the like, but in reality, the user attribute information includes attribute information (user profile), such as an age, gender, a domicile, and a family structure. Furthermore, the user attribute information may include information, such as visual impairment of the user, which is needed to select a type of information to be output. For example, if it is registered, in the user attribute information, that the user has visual impairment, the response processing apparatus 100 may convert a content of a response that is normally displayed on a screen into a voice and output the voice. The conversion as described above may be performed using a well-known technology, such as a text-to-speech (TTS) process.

The "history information" indicates a use history of the response processing apparatus 100 by the user. In the example illustrated in FIG. 8, the item of the history information is schematically represented by "G01" or the like, but in reality, the history information includes various kinds of information, such as a content of a query that is issued by the user to the response processing apparatus 100, a history of repetition of a query, and a history of an output response. Furthermore, the history information may include voiceprint information, waveform information, or the like for identifying the user by voice.

In other words, in the example illustrated in FIG. 8, it is indicated that a user identified by a user ID of "U01" has the user attribute information of "F01" and the history information of "G01".

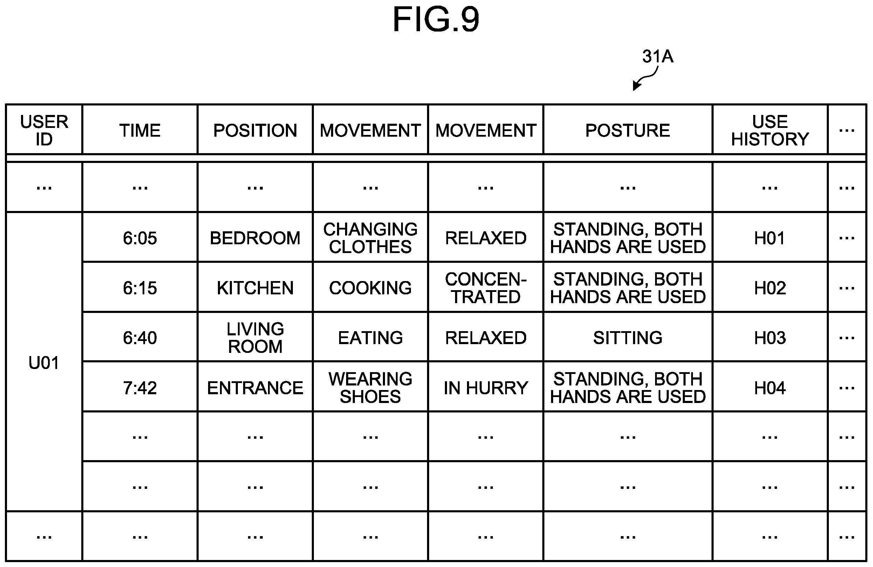

Meanwhile, the "history information" illustrated in FIG. 8 may include information indicating a past behavior of the user. FIG. 9 illustrates an example of behavior information on the user, which is included in the history information.

FIG. 9 is a diagram illustrating an example of a behavior information table 31A according to the first embodiment of the present disclosure. In the example illustrated in FIG. 9, the behavior information table 31A has items of a "user ID", a "time", a "position", a "movement", a "situation", a "posture", and a "use history".

The "user ID" corresponds to the same item as illustrated in FIG. 8. The "time" indicates a time at which the behavior of the user is observed. The "position" indicates a position at which the user is observed. The "movement" indicates a movement of the user. The "situation" indicates a situation of the user that is estimated by the movement or the like. The "posture" indicates a posture of the user. Meanwhile, the movement, the situation, and the posture are obtained by, for example, performing image recognition on an image or a video captured by the response processing apparatus 100. The "use history" indicates a history of use of the response processing apparatus 100 by the user when a certain behavior of the user is observed.

As illustrated in FIG. 9, the response processing apparatus 100 may acquire and store the behavior information on the user and the use history of the response processing apparatus 100 associated with the behavior information. With this configuration, the response processing apparatus 100 is able to acquire a tendency for each of users, such as a type of a behavior of the user and a type of a query or a dialogue that is performed when the user performs the behavior.

Next, the terminal information table 32 will be described. The terminal information table 32 stores therein information on the terminal 10 that cooperates with the response processing apparatus 100.

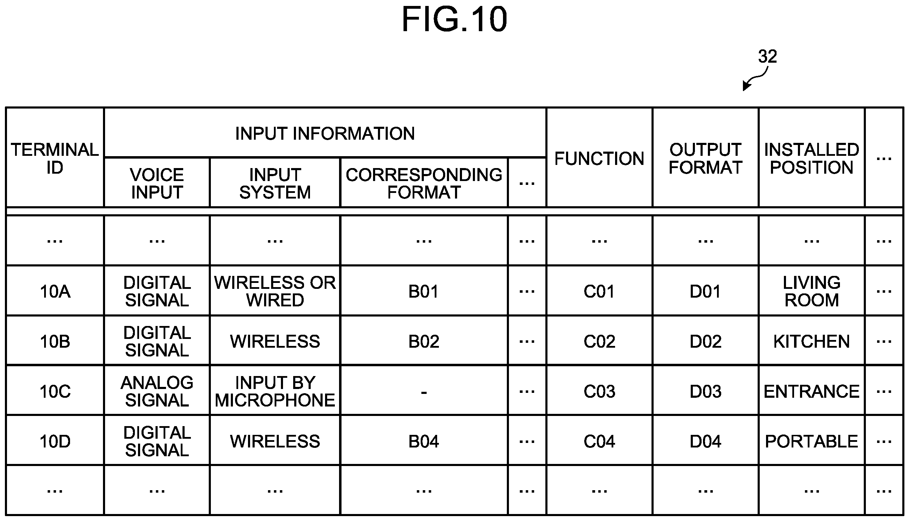

FIG. 10 illustrates an example of the terminal information table 32 according to the first embodiment.

FIG. 10 is a diagram illustrating an example of the terminal information table 32 according to the first embodiment of the present disclosure. In the example illustrated in FIG. 10, the terminal information table 32 has items of a "terminal ID", "input information", a "function", an "output format", and an "installation position". Furthermore, the "input information" includes sub items of "voice input", an "input system", and a "corresponding format".

The "terminal ID" indicates identification information for identifying the terminal 10. Meanwhile, in the specification, it is assumed that the same reference symbols are assigned to the terminal ID and the terminal 10. For example, the terminal 10 that is identified by a terminal ID of "10A" indicates the "terminal 10A".

The "input information" indicates information on a file format or the like at the time of input of information to the terminal 10. The "voice input" indicates information on an input format in which a voice is input to the terminal 10, or the like. The "input system" indicates, for example, information on an input system of a voice transmitted from the response processing apparatus 100. The "corresponding format" indicates a format of data (a voice, an image, or the like) that can be processed by the terminal 10. In the example illustrated in FIG. 10, the item of the corresponding format is schematically represented by "B01" or the like, but in reality, a type of a specific audio format ("mp3", "wav", or the like), a type of a still image format ("jpg" or the like), and a type of a video format ("mp4" or the like) that can be processed by the terminal 10 are stored in the item of the corresponding format. Furthermore, a type of an audio API, an image API, or the like included in the terminal 10 may be stored in the item of the corresponding format.

The "function" indicates a function included in the terminal 10. In the example illustrated in FIG. 10, the item of the function is schematically represented by "C01" or the like, but in reality, a type of a function that is executable by the terminal is stored in the item of the function. Meanwhile, detailed information on the function is stored in the function table 33 to be described later.

The "output format" indicates a data format that can be output by the terminal 10. In the example illustrated in FIG. 10, the item of the output format is schematically represented by "D01" or the like, but in reality, a detailed mode that can be output by the terminal, such as whether voice output is available, whether image output is available, or video replay is available.

The "installation position" indicates a position at which the terminal 10 is installed. Meanwhile, in the example in FIG. 10, the "installation position" is represented by a name, such as a "living room" or a "kitchen", in the home of the user, but different kinds of information may be stored in the item of the "installation position". For example, the "installation position" may be indicated by location information, such as specific longitude and latitude, or a corresponding position on a map that is generated by the response processing apparatus 100. In other words, the installation position may be any kind of information as long as the response processing apparatus 100 is able to recognize, by the information, the position of each of the terminals 10.

In other words, in the example illustrated in FIG. 10, it is indicated that the terminal 10A identified by the terminal ID of "10A" is configured such that a "digital signal" is adopted as the voice input, "wireless or wired" is adopted as the input system, and "B01" is adopted as the corresponding format. Furthermore, in the example illustrated in FIG. 10, it is indicated that the terminal 10A has the function of "C01", adopts the output format of "D01", and is located at the installation position of a "living room".

Next, the function table 33 will be described. The function table 33 stores therein detailed information on each of the functions of the terminal 10.

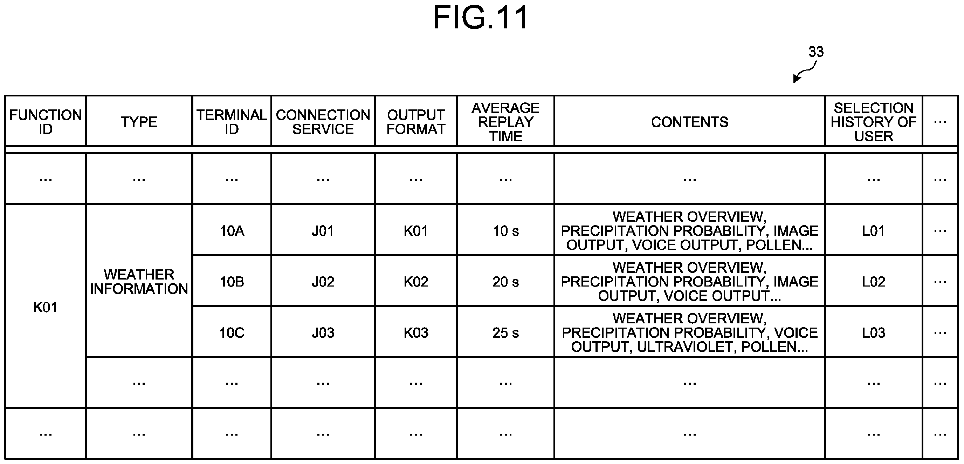

FIG. 11 illustrates an example of the function table 33 according to the first embodiment. FIG. 11 is a diagram illustrating an example of the function table 33 according to the first embodiment of the present disclosure. In the example illustrated in FIG. 11, the function table 33 has items of a "function ID", a "terminal ID", a "connection service", an "output format", an "average replay time", a "content", and a "selection history of user".

The "function ID" indicates identification information for identifying a function. The "terminal ID" corresponds to the same item as illustrated in FIG. 10. The "connection service" indicates a name of an external service, an application, or the like that is to be connected to implement the functions of each of the terminals 10. Meanwhile, if it is not necessary for the terminal 10 to connect to the external service to generate a response, the item of the "connection service" remains blank. Furthermore, in the example illustrated in FIG. 11, the item of the connection service is schematically represented by "J01" or the like, but in reality, a specific name indicating a service or a connection destination (specific address or the like) is stored in the connection service.

The "output format" indicates a format in which information that is received by each of the terminals 10 from the connected service can be output. For example, the output format is a voice, an image, or the like. The "average replay time" indicates a time that is taken to replay the information that is received by each of the terminals 10 from the connected service. The "content" indicates a content that can be acquired by each of the terminals 10 from the external service or the like. The "selection history of the user" indicates a history of selection of a certain terminal 10 and a frequency of the selection performed by the user who uses a certain function.

In other words, in the example illustrated in FIG. 11, it is indicated that a function identified by a function ID of "K01" is a function related to a "weather forecast", and a terminal that implements the function includes, for example, the "terminal 10A", the "terminal 10B", and the "terminal 10C". Further, it is indicated that the "terminal 10A" is connected to a service of "J01" to perform a weather forecast (in other words, to acquire information on the weather forecast), and acquires information corresponding to an output format of "K01", and, an average replay time of the information is "10 seconds". Furthermore, the information on the weather forecast acquired by the "terminal 10A" includes contents of "weather overview, precipitation probability, image output, voice output, pollen, ...". Moreover, it is indicated that a history of selection of the "terminal 10A" when the response processing apparatus 100 executes the function of the weather forecast is "L01".

Meanwhile, in FIG. 11, the "weather forecast" is illustrated as one example of the function, but the function is not limited to this example. For example, examples of the function of the terminal 10 include a function to output "traffic information", "news", and the like, a schedule management function, such as a "calendar", and a function to support an activity of the user, such as a "search for a recipe", "order in online store", "translation", an "encyclopedia", and a "dictionary". Furthermore, if the terminal 10 is a robot or the like, the terminal 10 may have a function to "express an emotion", "play with the user", "give a warning for danger", or the like. Moreover, the terminal 10 as a humanoid robot may have a function to "assist cooking", "give a message between family members", "perform translation", and the like. Furthermore, the terminal 10 as a gripper robot or a cleaning dedicated robot may have a function of a "cleaning sensor", a "dust sensor", a "movement or cleaning of an object", "DIY assist", or the like. Moreover, the function of the terminal 10 as a robot may include information on whether a "power unit (actuator)" is included or whether an "arm section (called a manipulator or the like)" is included.

Referring back to FIG. 7, explanation will be continued. The acquisition unit 40, the selection unit 50, and an output control unit 55 are processing units that execute information processing performed by the response processing apparatus 100. The acquisition unit 40, the selection unit 50, and the output control unit 55 are realized by, for example, causing a central processing unit (CPU), a micro processing unit (MPU), a graphics processing unit (GPU), or the like to execute a program (for example, the response processing program according to the present disclosure) stored in the response processing apparatus 100 by using a random access memory (RAM) or the like as a work area. Further, the acquisition unit 40, the selection unit 50, and the output control unit 55 are controllers, and may be implemented by integrated circuits, such as application specific integrated circuits (ASICs) or field programmable gate arrays (FPGAs).

The acquisition unit 40 is a processing unit that acquires various kinds of information. As illustrated in FIG. 7, the acquisition unit 40 includes a detection unit 41, a registration unit 42, and a receiving unit 43.

The detection unit 41 detects various kinds of information via the sensor 20. For example, the detection unit 41 detects a voice spoken by the user via the voice input sensor 20A that is one example of the sensor 20. Further, the detection unit 41 may detect various kinds of information on a movement of the user, such as a facial information on the user, orientation, inclination, motion, a moving speed, or the like of the body of the user, or a movement of the user, via the image input sensor 20B, the acceleration sensor, the infrared sensor, or the like. In other words, the detection unit 41 may detect, as a context, various physical amounts, such as location information, acceleration, temperature, gravity, rotation (angular velocity), illuminance, geomagnetism, pressure, adjacency, humidity, or a rotation vector.

The registration unit 42 receives registration from the user via the input unit 21. For example, the registration unit 42 receives registration of a user profile (attribute information) from the user via the touch panel or the keyboard.

Further, the registration unit 42 may receive registration of a schedule or the like of the user. For example, the registration unit 42 receives registration of a schedule from the user by using an application function that is incorporated in the response processing apparatus 100.

The receiving unit 43 receives various kinds of information. For example, if the attribute information or the schedule information on the user is registered in an external service or the like instead of the response processing apparatus 100, the receiving unit 43 receives the attribute information, the schedule, or the like on the user from the external server 200.

Further, the receiving unit 43 may receive a context related to communication. For example, the receiving unit 43 may receive, as the context, a connection condition between the response processing apparatus 100 and various devices (a server on the network, a household appliance in the home, or the like). The connection condition with the various devices may be information indicating whether mutual communication is established, a communication standard used for the communication, or the like, for example.

The acquisition unit 40 controls each of the processing units as described above and acquires various kinds of information. For example, the acquisition unit 40 acquires, from the user, input information that is information used as a trigger to cause the terminal 10 to generate a response.

For example, the acquisition unit 40 acquires voice information spoken by the user as the input information. Specifically, the acquisition unit 40 acquires a speech of the user, such as "let me know weather", and acquires, as the input information, a certain purpose included in the speech.

Alternatively, the acquisition unit 40 may acquire, as the input information, detection information on a detected behavior of the user. The detection information is information that is detected by the detection unit 41 via the sensor 20. Specifically, the detection information is a behavior of the user, such as information indicating that the user has viewed the camera of the response processing apparatus 100 or information indicating that the user has moved from a certain room to an entrance in the home, which may be used as a trigger to cause the response processing apparatus 100 to generate a response.

Further, the acquisition unit 40 may acquire information on various contexts. The context is information indicating various situations in which the response processing apparatus 100 generates a response. Meanwhile, the context includes "information indicating a situation of the user", such as the behavior information indicating that the user has viewed the response processing apparatus 100, and therefore, the context may be used as the input information.

For example, the acquisition unit 40 may acquire, as the context, the attribute information on the user that is registered in advance by the user. Specifically, the acquisition unit 40 acquires information, such as gender, an age, or a domicile, on the user. Furthermore, the acquisition unit 40 may acquire, as the attribute information, information indicating characteristics of the user, such as visual impairment of the user. Moreover, the acquisition unit 40 may acquire, as the context, information on a hobby, a preference, or the like of the user on the basis of the use history or the like of the response processing apparatus 100.

Furthermore, the acquisition unit 40 may acquire, as the context, location information indicating the location of the user. The location information may be information indicating a position, such as specific longitude and latitude, or information indicating a room in which the user is present in the home. For example, the location information may be information indicating a location of the user, such as whether the user is in a living room, a bedroom, or a child room in the home. Alternatively, the location information may be information on a specific place indicating an outing place in which the user is present. Furthermore, the information indicating the outing place in which the user is present may include information indicating a situation about whether the user is on a train, whether the user is driving a vehicle, or whether the user is in a school or an office. The acquisition unit 40 may acquire the information as described above by, for example, performing mutual communication with a mobile terminal, such as a smartphone, carried by the user.

Moreover, the acquisition unit 40 may acquire, as the context, estimation information on an estimated behavior or emotion of the user.

For example, the acquisition unit 40 acquires, as the context, behavior prediction information that is information estimated from a behavior of the user and that is information indicating a predicted future behavior of the user. Specifically, the acquisition unit 40 acquires behavior prediction information indicating that "the user is going out" as information that is estimated from a behavior indicating that the user has moved from a certain room to an entrance in the home. For example, if the acquisition unit 40 acquires the behavior prediction information indicating that "the user is going out", the acquisition unit 40 acquires a context that is tagged with "outing" on the basis of the information.

Furthermore, the acquisition unit 40 may acquire, as the behavior of the user, schedule information that is registered in advance by the user. Specifically, the acquisition unit 40 acquires schedule information that is registered with a scheduled time within a predetermined period from a time at which the user provides a voice (for example, within 1 day or the like). With this configuration, the acquisition unit 40 is able to estimate information or the like indicating that the user is going out at a certain time.

Moreover, the acquisition unit 40 may estimate a situation or an emotion of the user by detecting a moving speed of the user captured by the sensor 20, a location position of the user, a speech speed of the user, or the like. For example, the acquisition unit 40 may estimate a situation or an emotion indicating that "the user is in a hurry" when a speech speed that is faster than a normal speech speed of the user is observed. For example, the response processing apparatus 100 is able to perform adjustment to output a shortened response if the context indicating that the user is in a hurry as compared to a normal state is acquired.

Meanwhile, the contexts as described above are mere examples, and any kind of information indicating a situation in which the user and the response processing apparatus 100 are present may be used as the context. For example, the acquisition unit 40 may acquire, as the context, various physical amounts, such as location information, acceleration, temperature, gravity, rotation (angular velocity), illuminance, geomagnetism, pressure, adjacency, humidity, or rotation vector, of the response processing apparatus 100 acquired via the sensor 20. Furthermore, the acquisition unit 40 may acquire, as the context, a connection condition (for example, information on establishment of communication, or a communication standard being used) with various devices by using a built-in communication function.

Moreover, the context may include information on a dialogue between the user and a different user or between the user and the response processing apparatus 100. For example, the context may include dialogue context information indicating a context of a dialogue made by the user, a domain of the dialogue (weather, news, train operation information, or the like), a purpose of a speech of the user, the attribute information, or the like.

Furthermore, the context may include date/time information indicating a date and time at which the dialogue is performed. Specifically, the date/time information is information indicating a date, a time, a day, a public holiday characteristic (Christmas or the like), a time of day (morning, daytime, night, midnight), or the like.

Moreover, the acquisition unit 40 may acquire, as the context, various kinds of information indicating a situation of the user, such as information on a specific household task performed by the user, information on a content of a television program being viewed or what the user is eating, or information indicating that the user is making a conversation with a specific person.

Furthermore, by mutual communication with a household appliance (IoT device or the like) that is installed in the home, the acquisition unit 40 may acquire information on whether which of household appliances is activated (for example, whether a power is turned on or off) or a type of a process that is performed by a certain household appliance.

Moreover, by mutual communication with an external service, the acquisition unit 40 may acquire, as the context, traffic condition, weather information, or the like in a living area of the user. The acquisition unit 40 stores each piece of acquired information in the user information table 31 or the like. Furthermore, the acquisition unit 40 may refer to the user information table 31 or the terminal information table 32 and appropriately acquire information needed for a process.

Next, the selection unit 50 will be described. As illustrated in FIG. 7, the selection unit 50 includes a request analysis unit 51 and a state estimation unit 52. The selection unit 50 selects the terminal 10 that generates a response corresponding to input information from among the plurality of terminals 10, on the basis of information that is obtained through processes performed by the request analysis unit 51 and the state estimation unit 52.

Meanwhile, the selection unit 50 may select the terminal 10 that generates the response corresponding to the input information from among the plurality of terminals 10 when determining that it is difficult for the response processing apparatus 100 to generate a response to the input information. In other words, the selection unit 50 may cause the subject apparatus to generate the response if the subject apparatus is able to generate the response. With this configuration, the selection unit 50 is able to promptly cope with a dialogue that can be processed by the subject apparatus.

Furthermore, the selection unit 50 may determine whether each of the terminals 10 is able to generate the response corresponding to the input information, and select, as the terminal 10 that generates the response corresponding to the input information, the certain terminal 10 other than the terminal 10 that is determined as being not able to generate the response corresponding to the input information. In other words, the selection unit 50 may refer to the terminal information table 32 or the function table 33, and select the terminal 10 that is expected to be able to generate the response. With this configuration, the selection unit 50 is able to save time and effort to randomly transmit a request to all of the terminals 10.

Moreover, the selection unit 50 may select the plurality of terminals 10 as the terminals 10 that generate the responses corresponding to the input information. In other words, the selection unit 50 may select the plurality of terminals 10 that are able to generate the responses, instead of selecting only the single terminal 10 as the terminal 10 that generates the response. With this configuration, the selection unit 50 is able to diversify the responses that are generated for the query from the user.

The selection unit 50 converts the input information to a mode that can be recognized by each of the selected terminals 10, and transmits the converted input information to the plurality of terminals 10. For example, as illustrated in FIG. 2 or the like, the selection unit 50 converts an analysis result of a speech of the user to a format that can be read by each of the terminals 10, and transmits the converted information to each of the terminals 10.

For example, the selection unit 50 may transmit an analysis result of a speech of the user by using the API of each of the terminals 10. Furthermore, the selection unit 50 may transmit an analysis result of the speech of the user by using a different method if the API used by the terminal 10 is not available or if the API is unknown.

For example, the selection unit 50 may transmit the input information to the terminal 10 by actually replaying the speech of the user by voice if the terminal 10 is not able to receive information by communication but is only able to receive analog voice input.

The request analysis unit 51 performs a meaning understanding process on the information acquired by the acquisition unit 40. Specifically, the request analysis unit 51 performs the automatic speech recognition (ASR) process or the natural language understanding (NLU) process on voice information or the like acquired by the acquisition unit 40. For example, the request analysis unit 51 decomposes the acquired voice into morphemes through the ASR or the NLU, or determines a purpose or an attribute that is included in each of the morphemes as elements.

Meanwhile, if the purpose of the user is not understandable as a result of analysis of the input information, the request analysis unit 51 may send a notice of this fact to the output control unit 55. For example, if information that is not estimated from the speech of the user is included as a result of the analysis, the request analysis unit 51 sends the content to the output control unit 55. In this case, the output control unit 55 may generate a response to request a user to accurately speak again about unclear information.

The state estimation unit 52 estimates a state of the user on the basis of the context acquired by the acquisition unit 40. The selection unit 50 may select the terminal 10 on the basis of the information that is estimated by the state estimation unit 52. For example, if the state estimation unit 52 estimates that the user is present near an entrance at a timing at which the user speaks, the selection unit 50 may preferentially select the terminal 10 that is installed near the entrance as the terminal 10 that generates a response.

The output control unit 55 controls output of the response that corresponds to the input information and that is generated by the terminal 10 selected by the selection unit 50.

For example, if the plurality of terminals 10 generate the responses, the output control unit 55 determines a response to be output to the user on the basis of information on comparison among the responses generated by the plurality of terminals 10.

As one example, the output control unit 55 determines a response to be output to the user on the basis of an information amount or a type of each of the responses generated by the plurality of terminals 10.

For example, as illustrated in FIG. 5, if the plurality of terminals 10 generate responses on the weather information, the output control unit 55 determines weather information containing a large amount of information as information to be output to the user. Alternatively, the output control unit 55 refers to a history of a dialogue with the user, and if a history of a request of the "pollen information" by the user is larger than a history of the "ultraviolet information", the output control unit 55 may determine weather information including a type of the "pollen information" as information to be output to the user. In other words, if the plurality of responses are present, the output control unit 55 flexibly determines a response that is actually to be output to the user in accordance with an information amount or a type of the response or a past history or a situation (in other words, the context) of the user. With this configuration, the output control unit 55 is able to output a response that is more suitable for a request of the user.

Meanwhile, the output control unit 55 may determine a response to be output among the responses, by using, as a determination criterion, the fact that reliability of source information is high (for example, the service is used by a large number of users, or the like) or the fact that the service is more preferred by the user.

Meanwhile, the output control unit 55 may generate the response to be output to the user by combining the plurality of responses that are generated by the plurality of terminals 10.

For example, as illustrated in FIG. 5, if the plurality of terminals 10 have generated the responses related to the weather information, the output control unit 55 determines a type of information included in each piece of the weather information. As one example, the output control unit 55 acquires presence or absence of information included in each piece of the weather information (presence or absence of screen display, presence or absence of voice output, presence or absence of precipitation probability, or the like) as a vector. In this case, the vector stores "1" in a dimension in which the information is present, and stores "0" in a dimension in which the information is absent. The output control unit 55 generates a vector in which dimensions storing "1" is increased as much as possible by acquiring and combining a plurality of pieces of weather information. Then, the output control unit 55 converts the generated vector to a voice, and outputs the voice to the user. With this configuration, the output control unit 55 is able to provide weather information that includes all pieces of information (in the example in FIG. 5, the "ultraviolet information" and the "pollen information") that are less likely to be included when a response is generated by each of the terminals 10.

Meanwhile, the output control unit 55 may flexibly combine pieces of information by selecting information so as to match a predetermined replay time for example, instead of combining all kinds of acquired weather information.

Furthermore, the output control unit 55 may determine a mode of output of the response generated by the selected terminal 10, on the basis of the context.

As one example, the output control unit 55 may determine a type of a response to be output to the user or an output destination where the response is to be output, in accordance with the attribute information on the user. For example, when the weather information is to be output, and if the attribute of the user is a "child", the output control unit 55 may select "image output" by which the weather can be recognized at a glance, instead of voice output that may include a word or the like that may be hard to understand. In this case, the output control unit 55 may select the terminal 10 that performs output in accordance with the type (image information) of the information to be output. Specifically, the output control unit 55 selects the terminal 10 that can perform image display, and causes the terminal 10 to output the response.

Furthermore, if the attribute of the user includes "visual impairment", the output control unit 55 may give priority to voice output instead of image output. Moreover, if it is expected that the user may have difficulty in understanding the response of the terminal 10, the output control unit 55 may add a voice to be output to the user. For example, it is assumed that the user issues a request to "reduce room temperature" to the response processing apparatus 100. In this case, the response processing apparatus 100 transmits the request of the user to the terminal 10 that is an air conditioner, and causes the terminal 10 to provide a response to the user. In this case, the terminal 10 provides a response of "reduction of set room temperature". At this time, if the attribute of the user includes "visual impairment", the user is not able to understand an operating condition even when the user views the air conditioner, and therefore, the response processing apparatus 100 outputs specific information that can easily be understood by the user, such as "temperature of the air conditioner is reduced by two degrees", by voice. With this configuration, the user is able to perceive, via the response processing apparatus 100, operation that is performed by the terminal 10. Furthermore, if the attribute of the user includes "auditory impairment", the response processing apparatus 100 may perform various kinds of output in accordance with the user, such as displaying, on a screen, of a reaction sound that occurs at the time of operation of the terminal 10.

Moreover, the output control unit 55 may determine the terminal 10 that outputs the response to the user, on the basis of a positional relationship between the user and at least one of the terminals 10.

For example, the output control unit 55 may cause the terminal 10, which is located closest to the user at the time the response is generated, to output the response. For example, if a position of the terminal 10 that has generated the response and a position of the user are located distant from each other, and if a different terminal 10 is located near the user, the output control unit 55 acquires the response from the terminal 10 that has generated the response and transmits the acquired response to the terminal 10 that is located near the user. Then, the output control unit 55 causes the different terminal 10 located near the user to output the response. With this configuration, the user is able to more accurately perceive the response.

Moreover, if the estimation information on an estimated behavior or an estimated emotion of the user is acquired as the context, the output control unit 55 may determine a type of a response to be output to the user, a mode of the response, or the terminal 10 that outputs the response, on the basis of the estimation information.

For example, if the user speaks that "let me known today's weather" at a speech speed that is faster than usual, the output control unit 55 estimates that the user is "in a hurry" as compared to a normal state. In this case, the output control unit 55 outputs a response that can convey the weather information to the user in the shortest replay time among the responses obtained from the plurality of terminals 10, for example. Alternatively, the output control unit 55 may change a mode of output such that the weather information is output at a faster speed than usual.

Furthermore, if the user speaks that "let me know today's weather" while moving from a living room to an entrance, the output control unit 55 estimates a behavior that the user is moving to the entrance. In this case, the output control unit 55 may cause the terminal 10 that is installed at the entrance to output the weather information such that the information can easily be perceived by the user.

One example of a relationship between the behavior of the user and the response will be described below with use of an example of the behavior of the user as illustrated in FIG. 9. In the example in FIG. 9, it is assumed that the user issues a query about "weather information" to the response processing apparatus 100 when the user is in the bedroom (behavior data at a time of "6:05" in FIG. 9). In this case, the output control unit 55 may output, to the user, weather information including an advice for clothes ("it will be cold today" or the like) on the basis of the context that the user issues the query about weather in the bedroom at an early time in the morning.

Furthermore, in the example in FIG. 9, it is assumed that the user issues a query about "weather information" to the response processing apparatus 100 when the user is in the kitchen (behavior data at a time of "6:15" in FIG. 9). In this case, the output control unit 55 may select and output a response that does not include screen display and that includes a large amount of voice information because the user is in a concentrated state. Moreover, in the example in FIG. 9, it is assumed that the user issues a query about "weather information" to the response processing apparatus 100 when the user is in the living room (behavior data at a time of "6:45" in FIG. 9). In this case, the output control unit 55 may select and output a response that includes screen display with a large amount of information because the user is in a concentrated state. Furthermore, in the example in FIG. 9, it is assumed that the user issues a query about "weather information" to the response processing apparatus 100 when the user is in the entrance (behavior data at a time of "7:42" in FIG. 9). In this case, the output control unit 55 may output a response that includes voice output as short as possible and that includes information related to outing (ultraviolet information or the like) because it is assumed that the user is in a hurry just before going out. In this manner, the output control unit 55 is able to control output of different kinds of responses in accordance with the contexts.

When outputting the response generated by the output control unit 55, the output control unit 55 converts the response to an output format corresponding to each of the terminals 10 for example, and transmits the converted information to the terminal 10. For example, the output control unit 55 converts a text response included in the response to voice data corresponding to the terminal 10 that serves as the output destination. Alternatively, the output control unit 55 converts a response including image information that is generated or acquired by any of the terminals 10 to image data corresponding to the terminal 10 that serves as the output destination.

The output unit 60 is a mechanism for outputting various kinds of information. For example, the output unit 60 is a speaker or a display. For example, if the output control unit 55 outputs a response, the output unit 60 outputs, to the user by voice, a name or the like of the terminal 10 that serves as the output destination. Further, the output unit 60 may output image data on the display. Furthermore, if the response processing apparatus 100 generates a response by the subject apparatus, the output unit 60 outputs the generated response by voice, by image, or the like. Meanwhile, the output unit 60 may output the response in various modes, such as by performing character recognition on the generated voice data and displaying the characters on the display.

### 1-3. Flow of response process according to first embodiment

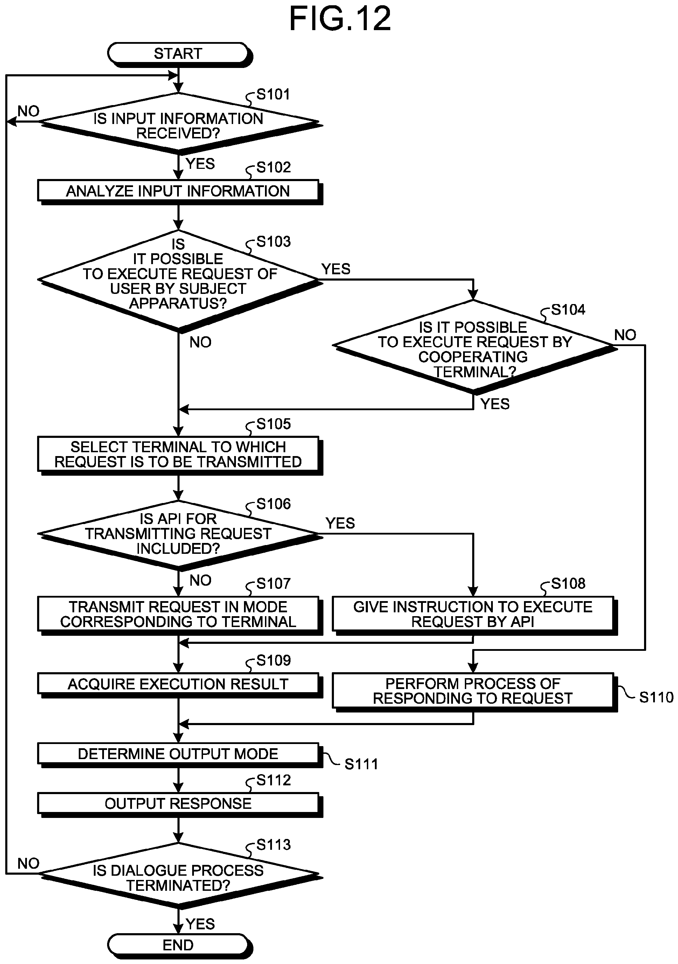

Next, a flow of the response process according to the first embodiment will be described with reference to FIG. 12. FIG. 12 is a flowchart illustrating a flow of a process according to the first embodiment of the present disclosure.

As illustrated in FIG. 12, the response processing apparatus 100 determines whether the input information is received (Step S101). If the input information is not received (Step S101; No), the response processing apparatus 100 waits until receiving the input information.

In contrast, if the input information is received (Step S101; Yes), the response processing apparatus 100 analyzes the input information (Step S102). Specifically, the response processing apparatus 100 analyzes the input information and acquires a purpose of the user, an attribute of the speech, or the like that is included in the input information.

Subsequently, the response processing apparatus 100 determines whether it is possible to execute the request of the user by the subject apparatus (Step S103). If it is possible to execute the request of the user by the subject apparatus (Step S103; Yes), the response processing apparatus 100 further determines whether it is possible to execute the request of the user by the cooperating terminal 10 (Step S104) .

If it is possible to cope with the request of the user by the cooperating terminal 10 (Step S104; Yes), or if it is difficult to execute the request of the user by the subject apparatus at Step S103 (Step S103; No), the response processing apparatus 100 selects the terminal 10 to which the request is to be transmitted (Step S105). As described above, the response processing apparatus 100 may select the single terminal 10 or select the plurality of terminals 10.

At this time, the response processing apparatus 100 determines whether the terminal 10 serving as a transmission destination has an API for transmitting the request (Step S106). If the terminal 10 does not have the API (Step S106; No), the response processing apparatus 100 transmits the request in a certain mode corresponding to the terminal 10 (Step S107). For example, the response processing apparatus 100 converts text representing the request to an analog voice, and outputs the converted voice to the terminal 10 in order to transmit (send) the request of the user. In contrast, if the terminal 10 has the API (Step S106; Yes), the response processing apparatus 100 gives an instruction to execute the request by the API (Step S108) .

Thereafter, the response processing apparatus 100 acquires an execution result obtained by executing a process on the request of the user by each of the terminals 10 (Step S109). For example, the response processing apparatus 100 acquires an execution result of a search process or the like corresponding to a query spoken by the user from each of the terminals 10.

Meanwhile, at Step S104, if it is difficult to execute the request of the user by the cooperating terminal 10 (Step S104; No), the response processing apparatus 100 performs a process of responding to the request by the subject apparatus (Step S110).

The response processing apparatus 100 that has acquired the execution result determines a mode of output of the response to the user (Step S111). For example, the response processing apparatus 100 determines a response to be output or determines the terminal 10 serving as an output destination that outputs the response, in accordance with the context or the like of the user.

The response processing apparatus 100 causes the terminal 10 serving as the output destination to output the response in the mode that is determined at Step S111 (Step S112). Alternatively, the response processing apparatus 100 outputs the response from the subject apparatus.

The response processing apparatus 100 that has output the response to the user determines whether a dialogue process with the user is terminated (Step S113) . Specifically, the response processing apparatus 100 determines whether a single session related to the dialogue with the user is terminated.

If the dialogue process is not terminated (Step S113; No), the response processing apparatus 100 returns the process to Step S101 and continues the dialogue process. In contrast, if it is determined that the dialogue process is terminated (Step S113; Yes), the response processing apparatus 100 terminates the process.

### 1-4. Modification of first embodiment

The response process according to the first embodiment as described above may include various modifications. A modification of the first embodiment will be described below.

For example, the response processing apparatus 100 may periodically update information that is stored in the terminal information table 32 or the function table 33. For example, functions of the terminal 10 may be expanded via the network in some cases. Specifically, the terminal 10 having a "translation" function may be updated to deal with a certain language that has not been dealt with.

In this case, the response processing apparatus 100 receives information indicating that the update is performed from the cooperating terminal 10, and updates information that is stored in the terminal information table 32 or the function table 33 on the basis of the received information. With this configuration, the user is able to enjoy the latest function without regard to update or the like of the functions of each of the terminals 10.

Furthermore, the response processing apparatus 100 may periodically transmit the activation word to each of the terminals 10, and check whether each of the terminals 10 normally operates.

Moreover, the response processing apparatus 100 may prevent the cooperating terminal 10 from giving a voice reply or the like. For example, if the user speaks to the response processing apparatus 100, the terminal 10 located nearby also detects the speech. In this case, the terminal 10 may provide a voice reply before the response processing apparatus 100 generates a response. Therefore, the response processing apparatus 100 may control a reply process to prevent the terminal 10 from giving a reply in advance of the subject apparatus.

Furthermore, when transmitting the request of the user to the plurality of terminals 10, the response processing apparatus 100 may simultaneously transmit the request to the plurality of terminals 10 by, for example, separating voice bands to be used. With this configuration, the response processing apparatus 100 is able to promptly send the request of the user to the plurality of terminals 10. Moreover, when transmitting the request, the response processing apparatus 100 may refrain from using a voice in an audible region as long as the terminal 10 serving as the transmission destination is able to perform the process. Furthermore, the response processing apparatus 100 may detect a frequency of a surrounding noise or a human voice, select a TTS with a voice sound that is different from the frequency of the noise, and output a voice.

Moreover, the response processing apparatus 100 may acquire a reaction to a certain response that has been output in the past from the user, and determine a type of a response to be output to the user, a mode of the response, or an output destination that outputs the response. In other words, the response processing apparatus 100 may perform a learning process on the basis of a reaction of the user.

For example, when a certain response is output to the user who has issued a query about a certain kind of information, the response processing apparatus 100 may receive a reaction, such as "let me know other information", from the user. In this case, the response processing apparatus 100 determines that the information that has been output in the past is not information that is desired by the user. In contrast, if the user accepts subsequently output information, the response processing apparatus 100 determines that the information is information desired by the user.

In this case, when receiving the same query from the user next time or later, the response processing apparatus 100 may preferentially select the terminal 10 that is able to generate a response as desired by the user. Furthermore, for example, if the user tends to request a certain terminal 10 to perform output (if the frequency that the user specifies the specific terminal 10 as the output destination is statistically high), the response processing apparatus 100 may perform adjustment such that the certain terminal 10 preferentially outputs the response. In this manner, the response processing apparatus 100 is able to perform the response process that can more appropriately cope with the request of the user, by performing learning on the basis of an instruction or an operation history of the user.

Moreover, for example, if biological authentication (face authentication, fingerprint authentication, or the like) of the user rather than the activation word is needed to activate the terminal 10, the response processing apparatus 100 may output a voice that notifies the user of this fact. Furthermore, the response processing apparatus 100 may notify the user of a position or information on the terminal 10 that is not activated, and request the user to activate the terminal 10.

Moreover, the response processing apparatus 100 may select the plurality of terminals 10 as output destinations. In this case, the response processing apparatus 100 may change the output destination in accordance with a type of information to be output as the response, such that, for example, a voice is output by the terminal 10A and an image is output by the terminal 10B. Furthermore, the response processing apparatus 100 may flexibly determine the output destination by, for example, simultaneously displaying information on both of a projector capable of displaying the information on a relatively large screen and a smart speaker with a monitor capable of displaying the information in a small size. Moreover, the response processing apparatus 100 may perform an output process in accordance with the surrounding context by, for example, displaying the information on the projector in a dark surrounding environment, and displaying the information on a smart television in a bright surrounding environment.

Furthermore, when transmitting the request of the user to each of the terminals 10, the response processing apparatus 100 may transmit the input information (voice or the like) received from the user as it is without extracting the purpose of the user. Moreover, in this case, the response processing apparatus 100 may perform character recognition on the voice of the user, and converts a text indicating the request. For example, it is assumed that the user has issued a request of "let me show an almanac of a next month" to the response processing apparatus 100. In this case, for example, if it is determined that each of the terminals 10 may have difficulty in recognizing the "almanac", the response processing apparatus 100 may refer to a synonym dictionary or a thesaurus, and converts the request of the user to a mode that can be recognized by each of the terminals 10. For example, the response processing apparatus 100 may convert the request of the user to "let me show a calendar of a next month" and transmits the converted information to the terminal 10A. Furthermore, the response processing apparatus 100 may convert the request of the user to "let me show a schedule of a next month" and transmits the converted information to the terminal 10B. In this manner, the response processing apparatus 100 may perform, as the front end device, various adjustment processes such that the request is smoothly issued to each of the terminals 10. With this configuration, the user is able to issue a request without regard to a phrase that can be recognized by each of the terminals 10.

Moreover, the response processing apparatus 100 may set a priority or the like to the terminal 10 that provides a response to the request of the user. In this case, the response processing apparatus 100 preferentially selects the terminal 10 with a higher priority as the terminal 10 that generates the response. For example, the response processing apparatus 100 may set a higher priority to the terminal 10 that uses a non-chargeable service, with regard to an external service that is used when a certain function is executed. With this configuration, the response processing apparatus 100 is able to prevent the user from falsely being charged for use of the service or the like.

### 2. Second Embodiment

### 2-1. One example of response process according to second embodiment

A second embodiment will be described below. In the second embodiment, an example will be described in which an information device that behaves as the response processing apparatus according to the present disclosure is changed in accordance with a situation of the user. Meanwhile, in the second embodiment, reference symbols, such as a response processing apparatus 100A and a response processing apparatus 100B, are assigned for distinguishing the apparatuses, but functional configurations of the response processing apparatus 100A and the response processing apparatus 100B are the same as that of the response processing apparatus 100 described in the first embodiment. Further, in the description below, the response processing apparatus 100A and the response processing apparatus 100B will be collectively referred to as the "response processing apparatus 100" when they need not be distinguished from each other.

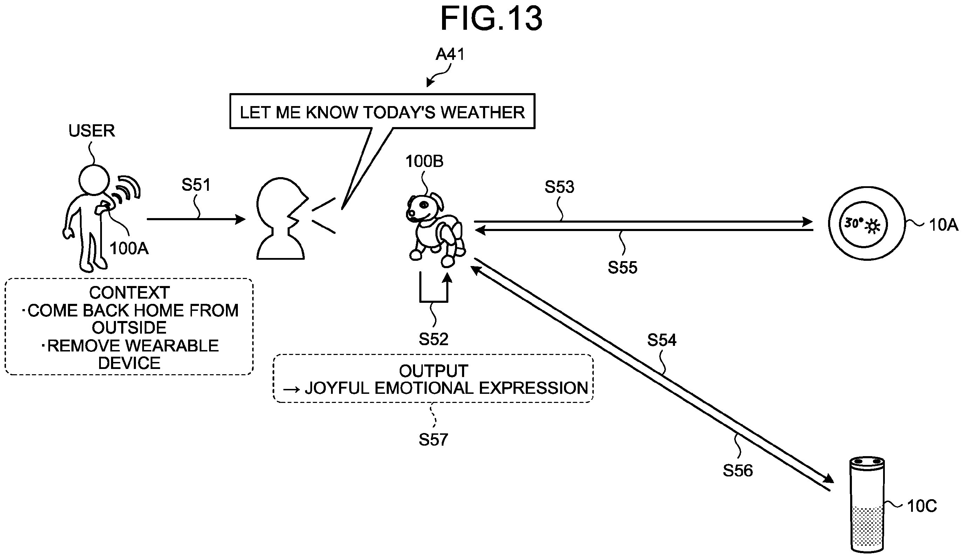

FIG. 13 illustrates an example of information processing according to the second embodiment of the present disclosure. FIG. 13 is a diagram illustrating an example of the information processing according to the second embodiment of the present disclosure. FIG. 13 illustrates an example in which the response processing apparatus 100A is a wearable device that is worn by the user.

In the example in FIG. 13, the user comes back home from outside and removes the response processing apparatus 100A that is the wearable device from his/her arm. At this time, the response processing apparatus 100A acquires a context indicating that the user came back home from outside and removed the response processing apparatus 100A that is the wearable device from his/her arm (Step S51) .

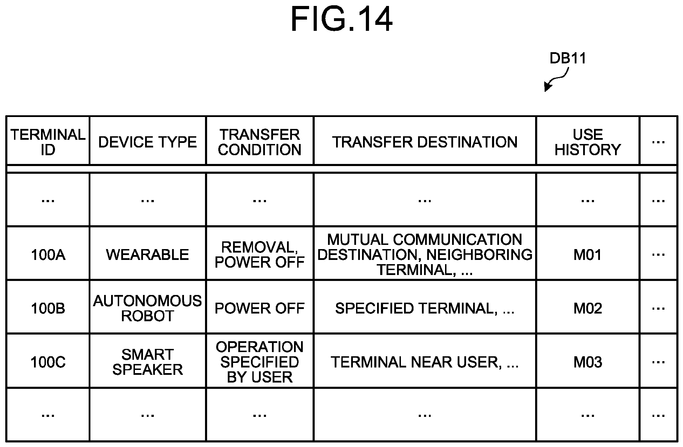

At this time, the response processing apparatus 100A transfers the function as the response processing apparatus according to the present disclosure to the response processing apparatus 100B that is one example of the terminal 10 located in the home. For example, the response processing apparatus 100A performs the transfer of the function of the response processing apparatus according to the present disclosure in accordance with a database DB11 as illustrated in FIG. 14.

FIG. 14 is a diagram illustrating an example of the database DB11 according to the second embodiment of the present disclosure. The database DB11 illustrated in FIG. 14 stores therein a condition under which the response processing apparatus according to the present disclosure is transferred. For example, in the example in FIG. 14, it is indicated that, if the response processing apparatus 100A meets a transfer condition of "detachment" or "power off", the functions of the response processing apparatus according to the present disclosure are transferred to the terminal 10 that is a "mutual communication destination" or the "neighboring terminal 10".

In the example in FIG. 13, the response processing apparatus 100A transfers the functions as the response processing apparatus according to the present disclosure to the response processing apparatus 100B in accordance with the information stored in FIG. 14. Thereafter, the response processing apparatus 100A may temporarily stop the functions or may function as one of the terminals 10.

Thereafter, the user inputs a request including a content of "let me know today's weather" to the response processing apparatus 100B that newly functions as the response processing apparatus according to the present disclosure. The response processing apparatus 100B acquires a voice A41 including the content of "let me know today's weather" (Step S52). If the response processing apparatus 100B determines that the purpose of the user is to "search for today's weather information" through the ASR process or the NLU process on the voice A41, the response processing apparatus 100B transmits the purpose of the user to each of the terminals 10.

The response processing apparatus 100B transmits, to the terminal 10A, information on a certain format corresponding to the terminal 10A (Step S53). Further, the response processing apparatus 100 transmits, to the terminal 10C, information on a certain format corresponding to the terminal 10C (Step S54).

The terminal 10A transmits, as a response, the retrieved weather information to the response processing apparatus 100B (Step S55). Similarly, the terminal 10B transmits, as a response, the retrieved weather information to the response processing apparatus 100B (Step S56).

Thereafter, the response processing apparatus 100B outputs the response to the user in accordance with the configuration included in the subject apparatus. For example, if the response processing apparatus 100B is an apparatus that does not output Japanese by voice, the response processing apparatus 100B outputs the response by giving an expression indicating fine weather (joyful emotional expression or the like), for example. In other words, the response processing apparatus 100B converts the output mode in accordance with the configuration included in the subject apparatus, and performs output to the user. Meanwhile, similarly to the first embodiment, the response processing apparatus 100B may cause the terminal 10A or the terminal 10C to output the response.

In this manner, the response processing apparatus 100A and the response processing apparatus 100B may transfer the functions as the response processing apparatus according to the present disclosure to the terminal 10 or the like. The terminal 10 to which the functions as the response processing apparatus according to the present disclosure are transferred subsequently behaves as the response processing apparatus according to the present disclosure. With this configuration, the user is able to perform the response process according to the present disclosure using the alternative terminal 10 even if the user loses sight of the response processing apparatus or the user leaves the response processing apparatus in a different place. In other words, the response processing apparatus according to the present disclosure is not limited to a specific apparatus, but may be any of the cooperating terminals 10.

### 2-2. Modification of second embodiment

The response processing apparatus 100 may set information, such as a priority, with respect to the terminal 10 that serves as a transfer destination. In this case, the response processing apparatus 100 may preferentially transfer the functions as the response processing apparatus according to the present disclosure to the terminal 10 with a higher priority. For example, the response processing apparatus 100 may set a higher priority to the terminal 10 that has higher information processing performance or the terminal 10 that has a larger number of functions.

### 3. Third Embodiment

A third embodiment will be described below. In the third embodiment, an example is described in which the response processing apparatus 100 responds to a request of the user by combining functions included in each of the terminals 10.

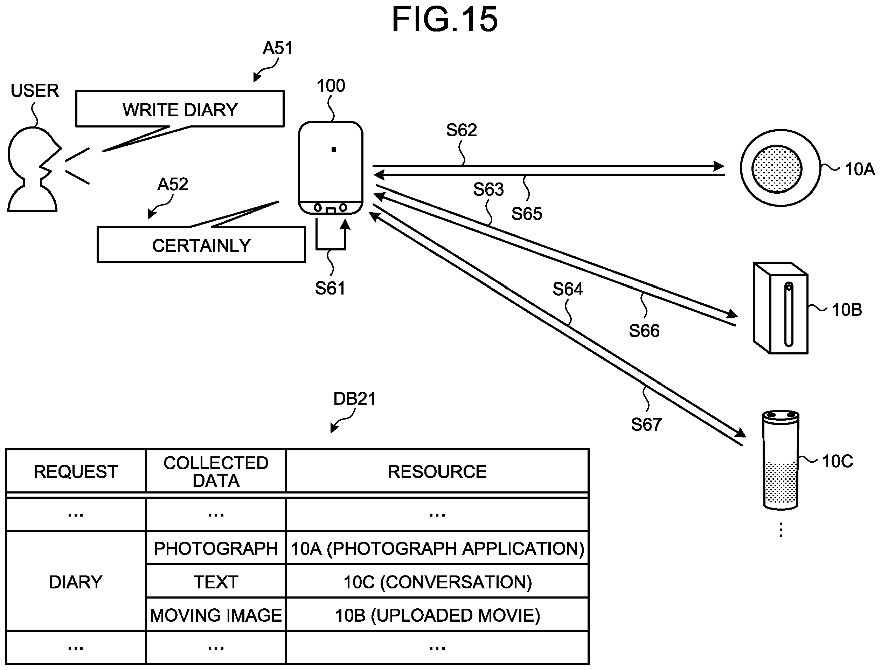

FIG. 15 illustrates an example of information processing according to the third embodiment of the present disclosure. FIG. 15 is a diagram illustrating an example of the information processing according to the third embodiment of the present disclosure.

In the example in FIG. 15, the response processing apparatus 100 receives a voice A51 including a request to "write a diary" from the user (Step S61). At this time, the response processing apparatus 100 refers to a database DB21 that stores therein information related to a request that is executed by a combination of a plurality of pieces of information. As illustrated in FIG. 15, the database DB21 stores therein a request from the user, data to be collected to execute the request, and a collection destination (resource) of the data.

The response processing apparatus 100 refers to the database DB21 and recognizes that a "photograph", a "text", and a "video" are to be collected as collection data in order to realize the request of "diary". Further, the response processing apparatus 100 recognizes that each piece of data is to be collected from a photograph application of the "terminal 10A", dialogue data accumulated by the "terminal 10C", video data uploaded on the network via the "terminal 10B", or the like.

Furthermore, the response processing apparatus 100 transmits a request to acquire each piece of data to write a diary to each of the terminals 10 (Step S62, Step S63, and Step S64). Moreover, the response processing apparatus 100 acquires data transmitted from each of the terminals 10 (Step S65, Step S66, and Step S67).

Furthermore, the response processing apparatus 100 responds to the request of the user by combining the pieces of acquired data. Specifically, the response processing apparatus 100 stores a diary of the day of the user by combining images that are captured within a predetermined time (for example, 24 hours), dialogues with the user, videos, and the like. The response processing apparatus 100 outputs a voice A52 including a content of "certainly" if the request is completed.

In this manner, the response processing apparatus 100 may respond to the request of the user by combining pieces of data that can be collected by each of the terminals 10. With this configuration, the response processing apparatus 100 is able to respond to a complicated request that is issued by the user and that can hardly be executed by a single apparatus. For example, it is assumed that the response processing apparatus 100 receives a request to "make a travel plan" from the user. In this case, the response processing apparatus 100 causes each of the terminals 10 to perform a process of "searching for tourist site information", a process of "making a reservation of transportation", a process of "making a reservation of accommodation", and the like. Then, the response processing apparatus 100 responds to the request of the user by combining the pieces of information as described above. In this manner, the response processing apparatus 100 is able to accurately respond to the request of the user by combining a best process or an executable function of each of the terminals 10. Meanwhile, the response processing apparatus 100 may hold, in the subject apparatus, the information that is stored in the database DB21, or may access an external server or the like that holds information to realize the request and acquire the information every time a request of the user is received.

### 4. Fourth Embodiment

A fourth embodiment will be described below. In the fourth embodiment, an example will be described in which the response processing apparatus 100 outputs a content of a request to a different user with respect to a request for which each of the terminals 10 is not able to provide a response.

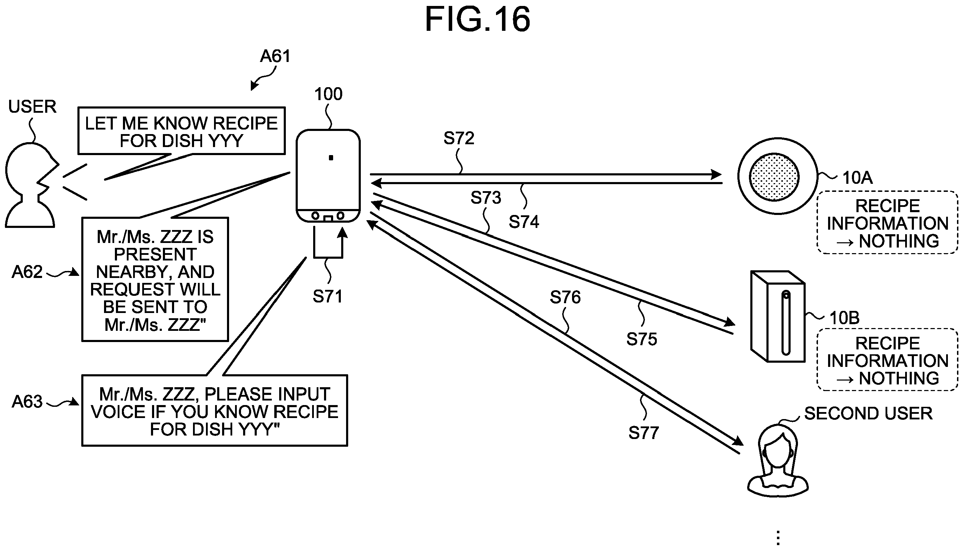

FIG. 16 illustrates an example of information processing according to the fourth embodiment of the present disclosure. FIG. 16 is a diagram illustrating an example of the information processing according to the fourth embodiment of the present disclosure.

In the example in FIG. 16, the response processing apparatus 100 receives a voice A61 including a request of "let me know a recipe for a dish YYY" from the user (Step S71). The response processing apparatus 100 transmits a request corresponding to the voice A61 to the cooperating terminal 10A and the cooperating terminal 10B (Step S72 and Step S73).

The terminal 10A provides a reply indicating that "a recipe of a dish YYY" is not retrieved with respect to the transmitted request (Step S74). Similarly, the terminal 10B provides a reply indicating that "a recipe of a dish YYY" is not retrieved (Step S75).

In this case, the response processing apparatus 100 controls a camera or the like included in the subject apparatus, the terminal 10A, or the terminal 10B, and attempts to detect a context of a different user who is present nearby. In the example in FIG. 16, it is assumed that the response processing apparatus 100 detects a second user named "ZZZ" near the terminal 10B. Meanwhile, it is assumed that information on the second user is held in advance in the user information table 31 or the like.

If the response processing apparatus 100 detects the second user, the response processing apparatus 100 outputs a voice A62 including a content of "Mr./Ms. ZZZ is present nearby, and a request will be sent to Mr./Ms. ZZZ" to the user. Meanwhile, if the user does not want to allow the second user to hear about the request, the user may input this fact to the response processing apparatus 100.

After outputting the voice A62, the response processing apparatus 100 causes the neighboring terminal 10B to output a voice A63 including a content of "Mr./Ms. ZZZ, please input a voice if you know a recipe for a dish YYY" (Step S76). If the second user knows "a recipe for a dish YYY", the second user inputs a voice to, for example, the terminal 10B (Step S77). Alternatively, the second user inputs information indicating that he/she does not know "a recipe for a dish YYY" to the terminal 10B.

The response processing apparatus 100 outputs the content returned from the second user to the user. In other words, if each of the terminals 10 does not generate a response, the response processing apparatus 100 outputs a query to the second user or the like and acquires a response to the request.

In this manner, if the response processing apparatus 100 determines that it is difficult to generate the response corresponding to the input information by any of the response processing apparatus 100 and the plurality of terminals 10, the response processing apparatus 100 acquires a context of a different user other than the subject user. Further, the response processing apparatus 100 determines an output destination of an output related to the input information on the basis of the context of the different user. The output related to the input information is, for example, a voice indicating that the agent device is not able to generate the response corresponding to the input information, a voice indicating a request to a different user for a reply to the input information, or the like. Specifically, the response processing apparatus 100 determines the terminal 10B as an output destination of the voice A63 illustrated in FIG. 16, and outputs the voice A63. Thereafter, if it is possible to obtain a reply from the different user, the response processing apparatus 100 is able to respond to the request of the user by outputting the voice from the response processing apparatus 100 or the like.

As described above, even if a request that a dialogue system is not able to solve is issued, the response processing apparatus 100 is able to detect a different user who is expected to solve the request by acquiring the context of the different user by controlling the plurality of terminals 10. With this configuration, the response processing apparatus 100 is able to improve the possibility that a certain response is to be output to the user even for a rare query that can hardly be solved by only the dialogue system or a query that is not recognizable by the agent device. Meanwhile, the response processing apparatus 100 may detect an object (for example, a specific tool or a book) that may serve as a reply to the request even the object is not cooperated with the response processing apparatus 100, rather than the different user. In this case, the response processing apparatus 100 may transmit a content described in the specific tool or the book to the user or provide a location of the specific tool or the book to the user.

### 5. Other Embodiments

The processes performed in each of the embodiments as described above may be performed in various different modes other than the embodiments as described above.

In each of the embodiments as described above, the examples have been described in which the response processing apparatus 100 is what is called a smart speaker and performs the process in a stand-alone manner. However, the response processing apparatus 100 may perform the response process according to the present disclosure in cooperation with a server apparatus (what is called a cloud server or the like) that is connected via the network.

In this case, the response processing apparatus 100 acquires a voice or a context that is input to a terminal, such as a smart speaker, generates a response on the basis of the acquired information, and transmits the generated response to the terminal. In this case, the terminal, such as the smart speaker, functions as an interface that mainly executes a dialogue process, such as a process of collecting a speech of the user, a process of transmitting the collected speech to the server apparatus, and a process of outputting a reply that is transmitted from the server, with the user.

Furthermore, the response processing apparatus according to the present disclosure may be realized by a mode of an IC chip or the like that is incorporated in the response processing apparatus 100.

Moreover, in each of the processes described in each of the embodiments as described above, all or part of a process described as being performed automatically may also be performed manually. Alternatively, all or part of a process described as being performed manually may also be performed automatically by known methods. In addition, the processing procedures, specific names, and information including various kinds of data and parameters illustrated in the above-described document and drawings may be arbitrarily changed unless otherwise specified. For example, various kinds of information illustrated in each of the drawings are not limited to information as illustrated in the drawings.

Furthermore, the components of the apparatuses illustrated in the drawings are functionally conceptual and do not necessarily have to be physically configured in the manner as illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions. For example, the request analysis unit 51 and the state estimation unit 52 may be integrated with each other.

Moreover, the embodiments and the modifications as described above may be combined appropriately as long as the processes do not conflict with each other.

Furthermore, the effects described in this specification are merely exemplified effects, and are not limitative, and, other effects may be achieved.

### 6. Effects of response processing apparatus according to present disclosure

As described above, the response processing apparatus according to the present disclosure (the response processing apparatus 100 according to one embodiment) includes an acquisition unit (the acquisition unit 40 according to one embodiment), a selection unit (the selection unit 50 according to one embodiment), and an output control unit (the output control unit 55 according to one embodiment). The acquisition unit acquires, from a user, input information that is information used as a trigger to cause an information device (the terminal 10 according to one embodiment) to generate a response. The selection unit selects an information device that generates a response corresponding to the input information from among a plurality of information devices. The output control unit controls output of a response that corresponds to the input information and that is generated by the selected information device.

In this manner, the response processing apparatus according to the present disclosure behaves as a front end device of the plurality of information devices, selects the information device that generates the response, and controls output. With this configuration, the response processing apparatus is able to omit time and effort to perform a dialogue with each of the information devices when the user uses the plurality of information devices, so that it is possible to improve usability for the user.

Furthermore, the acquisition unit acquires, as the input information, voice information that is spoken by the user. With this configuration, the response processing apparatus is able to perform an appropriate dialogue in accordance with a situation of the user during communication with the user via the voice.

Moreover, the acquisition unit acquires, as the input information, detection information on a detected behavior of the user. With this configuration, the response processing apparatus is able to generate an appropriate response in accordance with the behavior of the user even if the user does not speak.

Furthermore, when determining that the response processing apparatus is not able to generate a response corresponding to the input information, the selection unit selects an information device that generates a response corresponding to the input information from among the plurality of information devices. With this configuration, the response processing apparatus transmits, to the information device, only a request for which the subject apparatus is not able to respond, so that it is possible to prevent unnecessary communication from being performed, and it is possible to reduce a communication amount and a communication load.

Moreover, the selection unit determines whether each of the information devices is able to generate a response corresponding to the input information, and selects, as an information device that generates a response corresponding to the input information, an information device other than an information device that is determined as not being able to generate a response corresponding to the input information. With this configuration, the response processing apparatus is able to selectively transmit the request to only the information device that is able to cope with the request, so that it is possible to reduce a communication amount and a communication load.

Furthermore, the selection unit selects a plurality of information devices as information devices that generate responses corresponding to the input information. The output control unit determines a response to be output to the user on the basis of information on comparison among the responses generated by the plurality of information devices. With this configuration, the response processing apparatus is able to prepare a plurality of responses to the request of the user, so that it becomes easy to output a response that meets the request of the user.

Moreover, the output control unit determines a response to be output to the user on the basis of an information amount or a type of each of the responses generated by the plurality of information devices. With this configuration, the response processing apparatus is able to select and output a response with a large information amount from among a plurality of responses, so that it becomes easy to output a response that meets the request of the user.

Furthermore, the selection unit selects a plurality of information devices as information devices that generate responses corresponding to the input information. The output control unit synthesizes a plurality of responses generated by the plurality of information devices and generates a response to be output to the user. With this configuration, the response processing apparatus is able to select and generate a response from among pieces of information acquired by the plurality of devices, so that it is possible to issue an accurate response as desired by the user.

Moreover, the selection unit converts the input information to a mode that is recognizable by each of the selected information devices, and transmits the converted input information to the plurality of information devices. With this configuration, the response processing apparatus is able to promptly transmit the request of the user even to the plurality of information devices that have various APIs or input systems.

Furthermore, the acquisition unit acquires the context of the user. The output control unit determines a mode of output of the response generated by the selected information device on the basis of the context. With this configuration, the response processing apparatus is able to flexibly output a response in accordance with the context of the user, so that it is possible to more effectively provide an agent function, such as a dialogue, to the user.

Moreover, the acquisition unit acquires, as the context, attribute information on the user, which is registered in advance by the user. With this configuration, the response processing apparatus is able to generate a response in accordance with characteristics, such as an old age, a child, or visual impairment, of each of the user.

Furthermore, the output control unit determines a type of a response to be output to the user or an output destination that outputs the response, in accordance with the attribute information on the user. With this configuration, the response processing apparatus is able to select an appropriate output, such as a voice or an image, in accordance with the attribute of the user.

Moreover, the acquisition unit acquires, as the context, location information indicating a location of the user. With this configuration, the response processing apparatus is able to perform a response process with high usability, such as output of a response at a position at which the user is present.

Furthermore, the output control unit determines an information device that outputs a response to the user on the basis of a positional relationship between the user and at least one of the information devices. With this configuration, the response processing apparatus is able to flexibly perform output in accordance with the position of the user, such as output of the response from the information device located at a position close to the user.

Moreover, the acquisition unit acquires, as the context, estimation information on an estimated behavior or an estimated emotion of the user. With this configuration, the response processing apparatus is able to output a response that is suitable for a behavior to be performed by the user.

Furthermore, the output control unit determines a type of a response to be output to the user, a mode of the response, or an information device that outputs the response, on the basis of the estimation information. With this configuration, for example, if it is estimated that the user is in a hurry as compared to a normal state, the response processing apparatus is able to more flexibly cope with the output, such as output of a response in a shortened replay time.

Moreover, when determining that any of the response processing apparatus and the plurality of information devices is not able to generate a response corresponding to the input information, the acquisition unit acquires a context of a different user other than the user. The output control unit determines an output destination of an output related to the input information on the basis of the context of the different user. With this configuration, for example, the response processing apparatus is able to send, to the user, a query about a request that the agent device is not able to cope with, so that it is possible to improve the possibility to respond to the request of the user.

Furthermore, the acquisition unit acquires, from the user, a reaction to a response that has been output in the past. The output control unit determines a type of a response to be output to the user, a mode of the response, or the output destination that outputs the response, on the basis of the reaction acquired from the user. With this configuration, the response processing apparatus is able to reflect a learning result of the past reaction of the user in an output, so that it is possible to more accurately respond to the request of the user.

### 7. Hardware Configuration

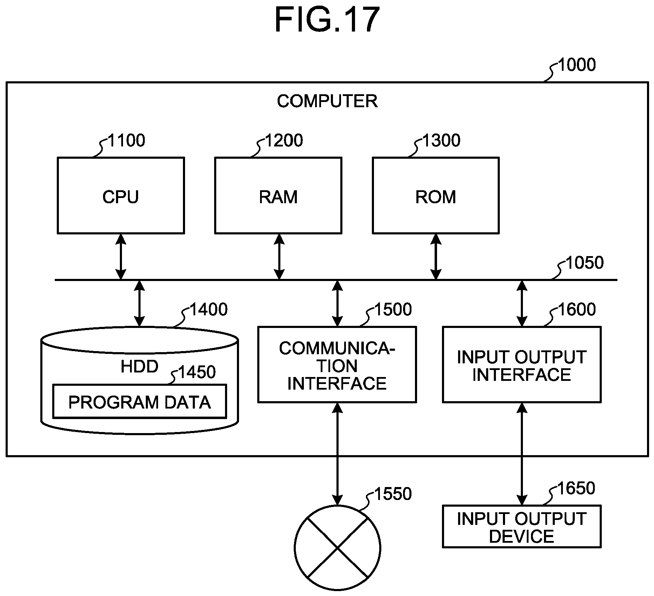

The information devices, such as the response processing apparatus 100, the terminal 10, and the external server 200, according to each of the embodiments as described above is realized by a computer 1000 configured as illustrated in FIG. 17, for example. In the following, the response processing apparatus 100 according to the first embodiment will be described as one example. FIG. 17 is a hardware configuration diagram illustrating an example of the computer 1000 that implements the functions of the response processing apparatus 100. The computer 1000 includes a CPU 1100, a RAM 1200, a read only memory (ROM) 1300, a hard disk drive (HDD) 1400, a communication interface 1500, and an input output interface 1600. All of the units of the computer 1000 are connected to one another via a bus 1050.

The CPU 1100 operates based on a program that is stored in the ROM 1300 or the HDD 1400, and controls each of the units. For example, the CPU 1100 loads a program stored in the ROM 1300 or the HDD 1400 onto the RAM 1200, and performs a process corresponding to various programs.

The ROM 1300 stores therein a boot program, such as basic input output system (BIOS), which is executed by the CPU 1100 at the time of activation of the computer 1000, a program that depends on the hardware of the computer 1000, and the like.

The HDD 1400 is a computer-readable recording medium that permanently records thereon a program executed by the CPU 1100 and data or the like used by the program. Specifically, the HDD 1400 is a recording medium that records thereon a response processing program according to the present disclosure, which is one example of program data 1450.

The communication interface 1500 is an interface that allows the computer 1000 to connect to an external network 1550 (for example, the Internet). For example, the CPU 1100 receives data from a different device and transmits data generated by the CPU 1100 to the different device via the communication interface 1500.

The input output interface 1600 is an interface for connecting an input output device 1650 and the computer 1000. For example, the CPU 1100 receives data from an input device, such as a keyboard or a mouse, via the input output interface 1600. Further, the CPU 1100 transmits data to an output device, such as a display, a speaker, or a printer, via the input output interface 1600. Furthermore, the input output interface 1600 may function as a media interface that reads a program or the like that is stored in a predetermined recording medium (media). Examples of the media include an optical recording medium, such as a digital versatile disk (DVD) or a phase change rewritable disk (PD), a magneto optical recording medium, such as a magneto-optical (MO) disk, a tape medium, a magnetic recording medium, and a semiconductor memory.

For example, if the computer 1000 functions as the response processing apparatus 100 according to the first embodiment, the CPU 1100 of the computer 1000 executes the response processing program loaded on the RAM 1200, and implements the functions of the acquisition unit 40 and the like. Further, the HDD 1400 stores therein the response processing program according to the present disclosure and the data stored in the storage unit 30. Meanwhile, the CPU 1100 reads the program data 1450 from the HDD 1400 and executes the program data 1450, but, as another example, the program may be acquired from a different apparatus via the external network 1550.

Additionally, the present technology may also be configured as below.
(1) A response processing apparatus comprising:
   an acquisition unit that acquires, from a user, input information that is information used as a trigger to cause an information device to generate a response;
   a selection unit that selects an information device that generates a response corresponding to the input information from among a plurality of information devices; and
   an output control unit that controls output of a response that corresponds to the input information and that is generated by the selected information device.
(2) The response processing apparatus according to (1), wherein the acquisition unit acquires, as the input information, voice information that is spoken by the user.
(3) The response processing apparatus according to (1) or (2), wherein the acquisition unit acquires, as the input information, detection information on a detected behavior of the user.
(4) The response processing apparatus according to any one of (1) to (3), wherein when determining that the response processing apparatus is not able to generate a response corresponding to the input information, the selection unit selects an information device that generates a response corresponding to the input information from among the plurality of information devices.
(5) The response processing apparatus according to (4), wherein the selection unit determines whether each of the information devices is able to generate a response corresponding to the input information, and selects, as an information device that generates a response corresponding to the input information, an information device other than an information device that is determined as not being able to generate a response corresponding to the input information.
(6) The response processing apparatus according to (4) or (5), wherein
   the selection unit selects a plurality of information devices as information devices that generate response corresponding to the input information, and
   the output control unit determines a response to be output to the user on the basis of information on comparison among the responses generated by the plurality of information devices.
(7) The response processing apparatus according to (6), wherein the output control unit determines a response to be output to the user on the basis of one of an information amount and a type of each of the responses generated by the plurality of information devices.
(8) The response processing apparatus according to any one of (4) to (7), wherein
   the selection unit selects a plurality of information devices as information devices that generate responses corresponding to the input information, and
   the output control unit synthesizes a plurality of responses generated by the plurality of information devices and generates a response to be output to the user.
(9) The response processing apparatus according to any one of (1) to (8), wherein the selection unit converts the input information to a mode that is recognizable by each of the selected information devices, and transmits the converted input information to the plurality of information devices.
(10) The response processing apparatus according to any one of (1) to (9), wherein
   the acquisition unit acquires a context of the user, and
   the output control unit determines a mode of output of a response generated by the selected information device on the basis of the context.
(11) The response processing apparatus according to (10), wherein the acquisition unit acquires, as the context, attribute information on the user, the attribute information being registered in advance by the user.
(12) The response processing apparatus according to (11), wherein the output control unit determines one of a type of a response to be output to the user and an output destination that outputs the response, in accordance with the attribute information on the user.
(13) The response processing apparatus according to any one of (10) to (12), wherein the acquisition unit acquires, as the context, location information indicating a location of the user.
(14) The response processing apparatus according to (13), wherein the output control unit determines an information device that outputs a response to the user on the basis of a positional relationship between the user and at least one of the information devices.
(15) The response processing apparatus according to any one of (10) to (14), wherein the acquisition unit acquires, as the context, estimation information on one of an estimated behavior and an estimated emotion of the user.
(16) The response processing apparatus according to (15), wherein the output control unit determines one of a type of a response to be output to the user, a mode of the response, and an information device that outputs the response, on the basis of the estimation information.
(17) The response processing apparatus according to any one of (10) to (16), wherein
   when determining that any of the response processing apparatus and the plurality of information devices is not able to generate a response corresponding to the input information, the acquisition unit acquires a context of a different user other than the user, and
   the output control unit determines an output destination of an output related to the input information on the basis of the context of the different user.
(18) The response processing apparatus according to any one of (1) to (17), wherein
   the acquisition unit acquires, from the user, a reaction to a response that has been output in the past, and
   the output control unit determines one of a type of a response to be output to the user, a mode of the response, and an output destination that outputs the response, on the basis of the reaction acquired from the user.
(19) A response processing method performed by a computer, the response processing method comprising:
   acquiring, from a user, input information that is information used as a trigger to cause an information device to generate a response;
   selecting an information device that generates a response corresponding to the input information from among the plurality of information devices; and
   controlling output of a response that corresponds to the input information and that is generated by the selected information device.
(20) A response processing program that causes a computer to function as:
   an acquisition unit that acquires, from a user, input information that is information used as a trigger to cause an information device to generate a response;
   a selection unit that selects an information device that generates a response corresponding to the input information from among a plurality of information devices; and
   an output control unit that controls output of a response that corresponds to the input information and that is generated by the selected information device.

### Reference Signs List

- 1: response processing system

- 10: terminal
- 100: response processing apparatus
- 20: sensor
- 20A: voice input sensor
- 20B: image input sensor
- 21: input unit
- 22: communication unit
- 30: storage unit
- 31: user information table
- 32: terminal information table
- 33: function table
- 40: acquisition unit
- 41: detection unit
- 42: registration unit
- 43: receiving unit
- 50: selection unit
- 51: request analysis unit
- 52: state estimation unit
- 55: output control unit
- 60: output unit
- 200: external server

## Claims

1. A response processing apparatus comprising:
an acquisition unit that acquires, from a user, input information that is information used as a trigger to cause an information device to generate a response;
a selection unit that selects an information device that generates a response corresponding to the input information from among a plurality of information devices; and
an output control unit that controls output of a response that corresponds to the input information and that is generated by the selected information device.

2. The response processing apparatus according to claim 1, wherein the acquisition unit acquires, as the input information, voice information that is spoken by the user.

3. The response processing apparatus according to claim 1, wherein the acquisition unit acquires, as the input information, detection information on a detected behavior of the user.

4. The response processing apparatus according to claim 1, wherein when determining that the response processing apparatus is not able to generate a response corresponding to the input information, the selection unit selects an information device that generates a response corresponding to the input information from among the plurality of information devices.

5. The response processing apparatus according to claim 4, wherein the selection unit determines whether each of the information devices is able to generate a response corresponding to the input information, and selects, as an information device that generates a response corresponding to the input information, an information device other than an information device that is determined as not being able to generate a response corresponding to the input information.

6. The response processing apparatus according to claim 4, wherein
the selection unit selects a plurality of information devices as information devices that generate response corresponding to the input information, and
the output control unit determines a response to be output to the user on the basis of information on comparison among the responses generated by the plurality of information devices.

7. The response processing apparatus according to claim 6, wherein the output control unit determines a response to be output to the user on the basis of one of an information amount and a type of each of the responses generated by the plurality of information devices.

8. The response processing apparatus according to claim 4, wherein
the selection unit selects a plurality of information devices as information devices that generate responses corresponding to the input information, and
the output control unit synthesizes a plurality of responses generated by the plurality of information devices and generates a response to be output to the user.

9. The response processing apparatus according to claim 4, wherein the selection unit converts the input information to a mode that is recognizable by each of the selected information devices, and transmits the converted input information to the plurality of information devices.

10. The response processing apparatus according to claim 1, wherein
the acquisition unit acquires a context of the user, and
the output control unit determines a mode of output of a response generated by the selected information device on the basis of the context.

11. The response processing apparatus according to claim 10, wherein the acquisition unit acquires, as the context, attribute information on the user, the attribute information being registered in advance by the user.

12. The response processing apparatus according to claim 11, wherein the output control unit determines one of a type of a response to be output to the user and an output destination that outputs the response, in accordance with the attribute information on the user.

13. The response processing apparatus according to claim 10, wherein the acquisition unit acquires, as the context, location information indicating a location of the user.

14. The response processing apparatus according to claim 13, wherein the output control unit determines an information device that outputs a response to the user on the basis of a positional relationship between the user and at least one of the information devices.

15. The response processing apparatus according to claim 10, wherein the acquisition unit acquires, as the context, estimation information on one of an estimated behavior and an estimated emotion of the user.

16. The response processing apparatus according to claim 15, wherein the output control unit determines one of a type of a response to be output to the user, a mode of the response, and an information device that outputs the response, on the basis of the estimation information.

17. The response processing apparatus according to claim 10, wherein
when determining that any of the response processing apparatus and the plurality of information devices is not able to generate a response corresponding to the input information, the acquisition unit acquires a context of a different user other than the user, and
the output control unit determines an output destination of an output related to the input information on the basis of the context of the different user.

18. The response processing apparatus according to claim 1, wherein
the acquisition unit acquires, from the user, a reaction to a response that has been output in the past, and
the output control unit determines one of a type of a response to be output to the user, a mode of the response, and an output destination that outputs the response, on the basis of the reaction acquired from the user.

19. A response processing method performed by a computer, the response processing method comprising:
acquiring, from a user, input information that is information used as a trigger to cause an information device to generate a response;
selecting an information device that generates a response corresponding to the input information from among the plurality of information devices; and
controlling output of a response that corresponds to the input information and that is generated by the selected information device.

20. A response processing program that causes a computer to function as:
an acquisition unit that acquires, from a user, input information that is information used as a trigger to cause an information device to generate a response;
a selection unit that selects an information device that generates a response corresponding to the input information from among a plurality of information devices; and
an output control unit that controls output of a response that corresponds to the input information and that is generated by the selected information device.
